# EUROPEAN PATENT APPLICATION

(11) **EP 4 488 008 A1**
(43) Date of publication of application: **08.01.2025**
(21) Application number: 23767047.6
(22) Date of filing: 22.02.2023
(51) Int. Cl.: B25J 5/00, B25J 9/08, B25J 19/00, B25J 19/02, G05D 1/02

(54) **ROBOT**

(30) Priority: 11.03.2022 KR 20220030757
(71) Applicant: LG Electronics Inc., Yeongdeungpo-gu Seoul 07336 (KR)
(72) Inventor: CHOI, Dongkyu, Seoul 08592 (KR)
(74) Representative: Vossius & Partner Patentanwälte Rechtsanwälte mbB
(86) International application number: PCT/KR2023/002535
(87) International publication number: WO 2023/171945

(57) **Abstract**

The present disclosure relates to a robot, and the robot may include a robot body in which a motor and a battery are accommodated, a leg unit coupled to each of both side surfaces of the robot body, a wheel unit including a wheel rolling along the ground, and a lower functional module detachably coupled to a lower side of the robot body, wherein a lower surface of the robot body may be provided with a coupling bar detachably coupled to the lower functional module, and in the lower functional module, at least a portion of the coupling bar may be accommodated in a bar accommodation groove, and a coupling hook is rotated to support a coupling bar accommodated in the accommodation groove.

## Description

### [Technical Field]

The present disclosure relates to a robot, and more specifically, to a robot capable of providing various services according to a user's command input.

### [Background Art]

Recently, with the advancement of a robot technology, the use of robots is increasing not only in industrial fields but also at home.

Home robots are robots that perform home tasks on behalf of people, such as helping with housework such as cleaning or controlling home appliances, or robots that act as a user's assistant or provide training to the user using artificial intelligence (AI), robots that replace companion animals, etc.

However, conventional home robots have limitations in that they perform only any one of the above functions and may not perform various functions depending on the user's needs or circumstances.

Meanwhile, there are not only robots that perform functions in a state of being fixed at a specific location but also movable mobile robots. In particular, in the case of robots used at home, the mobile robots that replace the user or move around the home while following the user are mainly used.

Among the mobile robots, two-wheeled robots with two wheels have advantages of being easy to store because they occupy a small area of ground and being easily used in homes with a relatively limited space due to a small rotation radius when the robot changes a direction.

However, the conventional two-wheeled robots have a limitation that a height of an obstacle at which the robots may pass is set in proportion to sizes of the wheels, and have a limitation that even when passing the obstacle, the robots may be not balanced due to an impact in a process of passing the obstacle, and thus the robot may fall over.

Meanwhile, US Patent Publication No. 2020-0362972A1 (2020.11.19) discloses a mobile robot that moves using a pair of legs provided with wheels.

The mobile robot may move by rotating the wheels provided on the pair of legs in a state of lifting an object using an arm. In this case, the mobile robot may pass an obstacle by bending or straightening the leg unit having a link structure.

However, to maintain balance during traveling or stopping, a body to which the leg unit is coupled is rotated in the form of a pendulum, and a counter-balance is rotated in response to the rotation of the body, thereby maintaining the balance of the mobile robot.

Therefore, the mobile robot has a limitation in that the body shakes in a vertical direction while maintaining balance.

In addition, since the body of the mobile robot shakes in the vertical direction, there is a limitation in that functional modules capable of performing additional functions cannot be coupled to upper and lower portions of the body.

Meanwhile, when the robot intends to perform a specific function, the robot should first find a functional module for performing the above function and then move toward the functional module.

In this process, it is necessary to set a movement path that is easily coupled to the functional module and move along the movement path.

Unlike simply setting a target point and moving to the shortest path, or recognizing obstacles and moving while avoiding the same, it is necessary to set an entry direction that is easily coupled to the functional module in consideration of the arrangement of the functional module.

Meanwhile, in order for a robot to be coupled to the functional module, there is a need for a coupling structure for detachably coupling the body of the robot to the functional module.

In general, a hook structure may be considered as a structure that detachably couples two or more objects.

However, in the case of general hook structures, a hook should be deformed for decoupling, and damage to the hook may occur in this process.

In addition, inconvenience may occur as a user should directly release the hook.

Therefore, it is necessary to develop a structure that may couple or decouple the body of the robot to and from the functional module with only a simple action of the user or robot.

### [Disclosure]

### [Technical Problem]

The present disclosure has been made in efforts to solve the conventional problems and is directed to providing a robot capable of stably maintaining balance using two wheels.

In addition, the present disclosure is directed to providing a robot capable of performing various functions according to a user's needs or circumstances.

In addition, the present disclosure is directed to providing a robot in which a space of a module can be minimized even when the module for performing a function is coupled.

In addition, the present disclosure is directed to providing a robot to which a function in use may be changed to a new function or the new function may be added to the function in use.

In addition, the present disclosure is directed to providing a robot capable of being easily detached from a module for performing a function.

In addition, the present disclosure is directed to providing a robot capable of detecting a location of a module for performing a function and moving to a correct location, and then being coupled to the module.

### [Technical Solution]

To achieve the objects, a robot according to the present disclosure may include a robot body in which a motor and a battery are accommodated, a leg unit coupled to each of both side surfaces of the robot body, and a wheel unit including a wheel rolling along the ground.

In this case, the robot according to the present disclosure may include a lower functional module detachably coupled to a lower side of the robot body.

In this case, a lower surface of the robot body may be provided with a coupling bar detachably coupled to the lower functional module, and in the lower functional module, at least a portion of the coupling bar may be accommodated in a bar accommodation groove, and a coupling hook is rotated to support a coupling bar accommodated in the accommodation groove.

When the coupling hook is rotated to a predetermined location, the coupling hook and a support stopper may be fastened to restrict the rotation of the coupling hook.

The lower functional module may further include a switch configured to rotate the support stopper, and when the switch is moved linearly, the coupling hook and the support stopper may be decoupled.

A lower functional module according to another embodiment of the present disclosure may include a lower functional module body, a pin guide portion which is coupled to the fastening unit body and in which a guide hole is formed, and a support pin inserted into the pin guide portion to support the fastening unit body.

In this case, the fastening unit body may be rotatably connected to the coupling hook through a connection link.

In this case, the support pin may be coupled to a pin link rotatably coupled to the lower functional module body and moved along the guide hole by being inserted into the guide hole.

In this case, the guide hole may be formed in a closed curve shape.

The support pin may be moved along the guide hole by the vertical movement of the fastening unit body.

In this case, the support pin may be moved upward, moved downward, or stopped relatively with respect to the fastening unit body.

When the fastening unit body is moved downward, the support pin may be relatively moved upward, and the coupling hook may be rotated and disposed above the coupling bar.

When the fastening unit body is moved upward, the support pin may be relatively moved downward, and the coupling hook may be rotated and may disappear above the coupling bar.

Meanwhile, the lower functional module may include a lamp provided on the lower functional module body and emitting infrared rays.

In this case, the lamp may be disposed on a rear end portion of the lower functional module body.

In addition, the robot body may enter the rear the lower functional module from the rear side, then may be moved downward, and coupled to the lower functional module.

### [Advantageous Effects]

As described above, according to the robot of the present disclosure, the load of the robot body can be vertically concentrated on the wheels by arranging the side frame and the leg unit of the robot body vertically above the pair of wheels. In addition, it is possible to prevent the robot body from shaking in the left-right direction by pressing the leg unit vertically downward by the load of the robot body Therefore, it is possible to stably maintain the balance of the robot body.

In addition, according to the robot of the present disclosure, it is possible to perform various functions by coupling the upper functional module to the upper side of the robot body or coupling the lower functional module to the lower side of the robot body according to the user's needs or circumstances.

In addition, according to the robot of the present disclosure, it is possible to minimize the space of the lower functional module in the state in which the lower functional module is coupled to the space between the lower portion of the robot body and the pair of leg units and the lower functional module is coupled.

In addition, it is possible to change the function in use to the new function by replacing the upper functional module or the lower functional module or adding the new function to the function in use by additionally installing the upper functional module or the lower functional module.

In addition, since the coupling bar and the coupling hook that are provided on the robot body may be coupled by only the simple operation of the robot body moving downward, the robot body and the lower functional module can be easily coupled. In addition, the robot body and the lower functional module can be easily separated by only the simple operation of the robot body re-moving downward or moving the switch provided on the lower functional module.

In addition, the robot body can detect the location of the lower functional module by operating the lamp provided on the lower functional module to detect the light radiated from the lamp, recognize the location at which the lamp is disposed as the rear side of the lower functional module, and enter the lower functional module from the rear side.

### [Description of Drawings]

FIG. 1 is a perspective view for describing a robot according to one embodiment of the present disclosure.
FIG. 2 is an exploded perspective view of FIG. 1.
FIG. 3 is a front view of the robot according to one embodiment of the present disclosure.
FIG. 4 is a rear view of the robot according to one embodiment of the present disclosure.
FIG. 5 is a side view of the robot according to one embodiment of the present disclosure.
FIG. 6 is a bottom view of the robot according to one embodiment of the present disclosure.
FIG. 7 is a view for describing a state in which an upper functional module has been removed from the robot according to one embodiment of the present disclosure.
FIG. 8 is a view for describing a leg unit in the robot according to one embodiment of the present disclosure.
FIG. 9 is a view for describing a connection relationship of the leg unit in the robot according to one embodiment of the present disclosure.
FIG. 10 is a view for describing a second link in the robot according to one embodiment of the present disclosure.
FIG. 11 is a view for describing a structure for hiding an electric wire in the robot according to one embodiment of the present disclosure.
FIG. 12 is a block diagram for describing a control configuration of the robot according to one embodiment of the present disclosure.
FIGS. 13 and 14 are views for describing a change in location of a wheel according to the movement of the leg unit in the robot according to one embodiment of the present disclosure.
FIG. 15 is a view for describing a relationship between the arrangement of the wheel and the arrangement for coupling with a lower functional module in the robot according to one embodiment of the present disclosure.
FIG. 16 is a schematic view for describing an example in which a load of a robot body is transmitted to the wheel in the robot according to one embodiment of the present disclosure.
FIG. 17 is a view for describing the lower functional module in the robot according to one embodiment of the present disclosure.
FIGS. 18 to 23 are views for describing a process in which a coupling bar of the robot body is coupled to the lower functional module in the robot according to one embodiment of the present disclosure.
FIG. 24 is a perspective view for describing a robot body fastening unit of a lower functional module in a robot according to another embodiment of the present disclosure.
FIG. 25 is an exploded perspective view for describing the robot body fastening unit of the lower functional module in the robot according to another embodiment of the present disclosure.
FIG. 26 is a view for describing a shape of a guide hole in the robot according to another embodiment of the present disclosure.
FIGS. 27 to 30 are views for describing a relationship of the movement of a support pin and the rotation of a coupling hook according to the movement of a fastening unit body in the robot according to another embodiment of the present disclosure.
FIG. 31 is a flowchart for describing a moving process for detecting a location of the lower functional module and being coupled to the lower functional module in the robot according to one embodiment of the present disclosure.
FIG. 32 is a view for describing a state in which the robot according to one embodiment of the present disclosure approaches the lower functional module to be coupled thereto.
FIG. 33 is a view for describing a state in which the robot according to one embodiment of the present disclosure is coupled to the lower functional module.

### [Mode for Invention]

Hereinafter, exemplary embodiments of the present disclosure will be described in detail with reference to the accompanying drawings.

Since the present disclosure may have various changes and various embodiments, specific embodiments are shown in the accompanying drawings and specifically described in the detail descriptions. This is not intended to limit the present disclosure to specific embodiments and should be construed to include all modifications, equivalents, and substitutes included in the spirit and technical scope of the present disclosure.

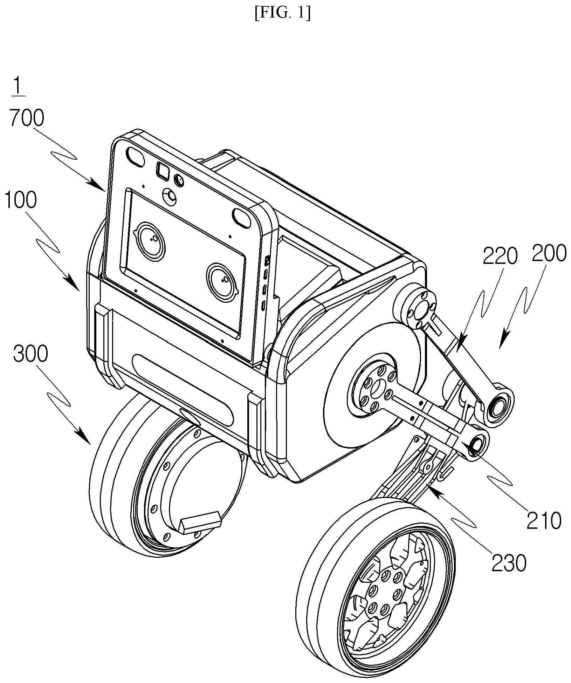

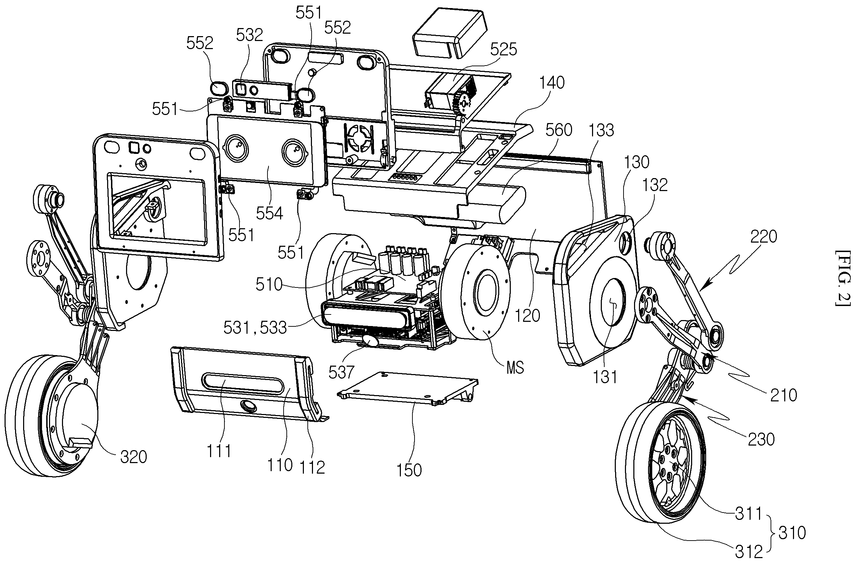

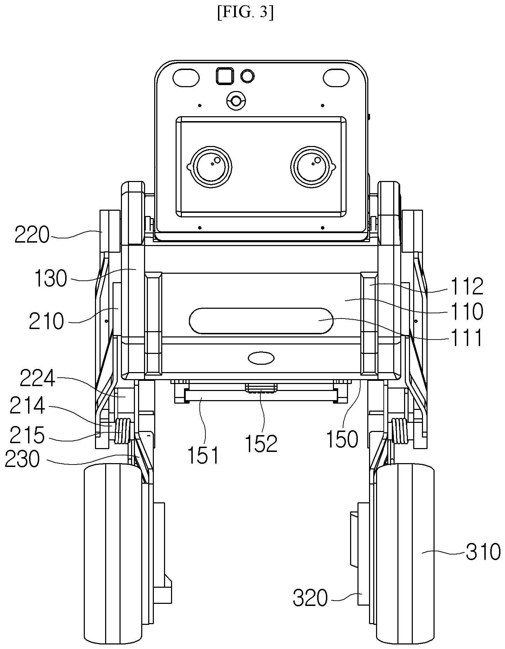

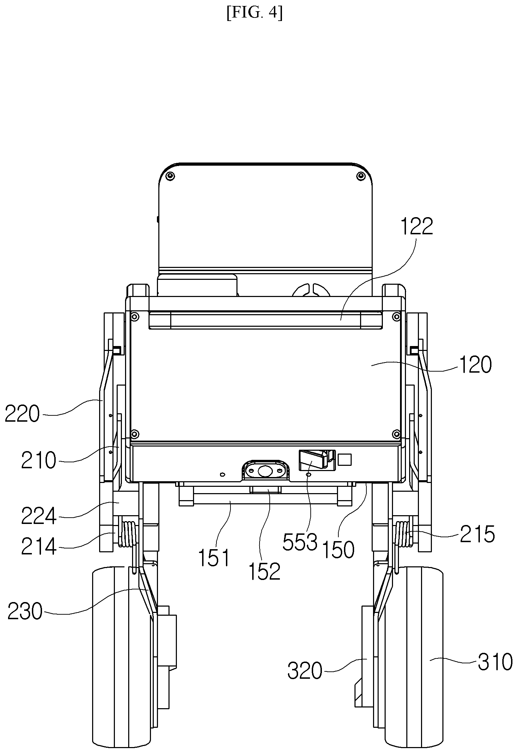

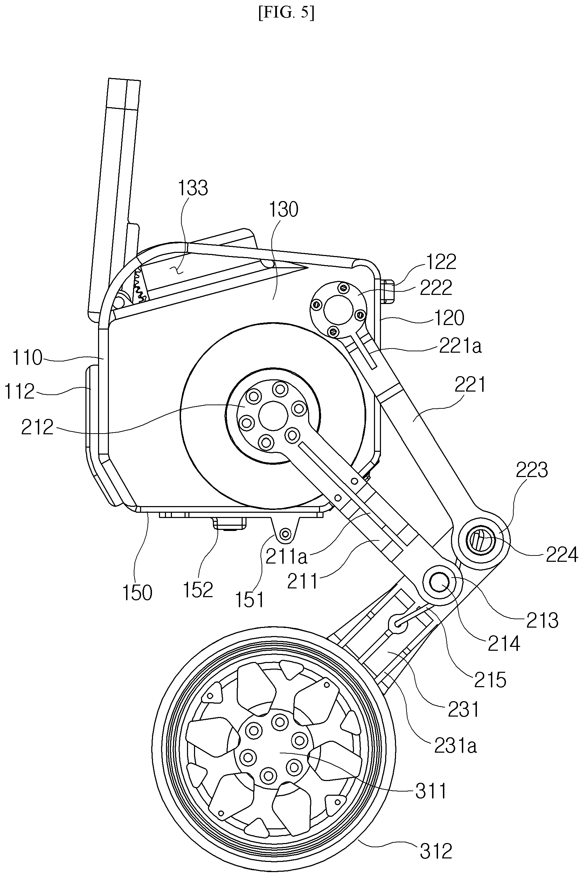

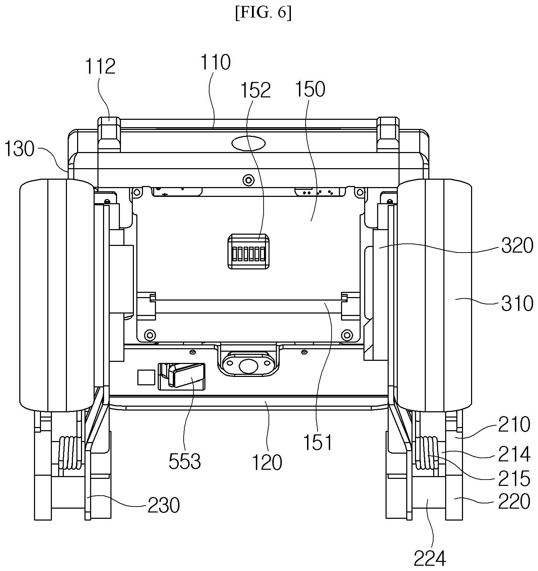

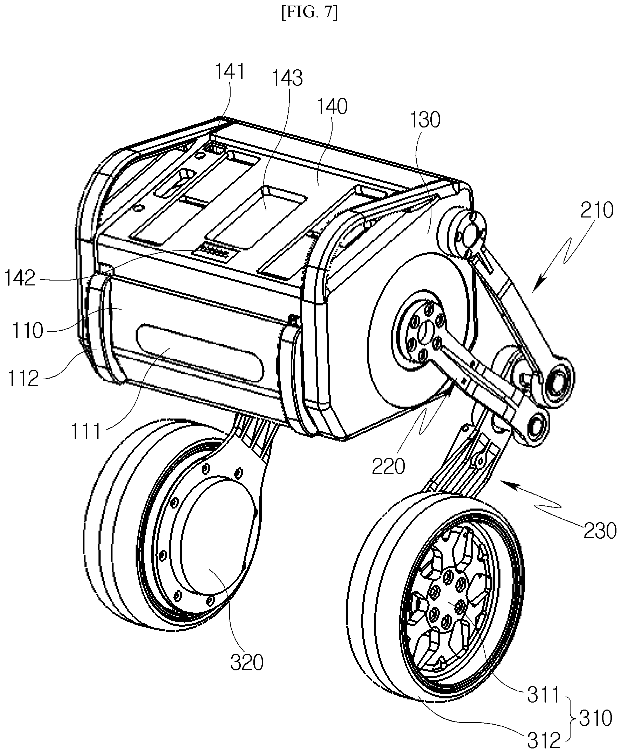

FIG. 1 is a perspective view for describing a robot according to one embodiment of the present disclosure, FIG. 2 is an exploded perspective view of FIG. 1, FIG. 3 is a front view of the robot according to one embodiment of the present disclosure, FIG. 4 is a rear view of the robot according to one embodiment of the present disclosure, FIG. 5 is a side view of the robot according to one embodiment of the present disclosure, FIG. 6 is a bottom view of the robot according to one embodiment of the present disclosure, and FIG. 7 is a view for describing a state in which an upper functional module has been removed from the robot according to one embodiment of the present disclosure.

Referring FIGS. 1 to 7, a robot 1 according to one embodiment of the present disclosure will be described as follows.

The robot 1 according to the embodiment of the present disclosure is placed on a floor to move along a floor surface B. Therefore, the following description will be made by setting a vertical direction based on a state in which the robot 1 is placed on the floor.

In addition, the following description will be made by setting a side at which a first camera 531 to be described below is disposed with respect to a battery 560 as a front. In addition, the following description will be made by setting a direction opposite to the front as a rear with respect to the battery 560.

A "lowest portion" of each component described in the embodiment of the present disclosure may be a portion of each component that is located to be lowest when the robot 1 according to the embodiment of the present disclosure is used by being placed on the floor, or may be a portion closet to the floor.

The robot 1 according to the embodiment of the present disclosure includes a robot body 100, a leg unit 200, and a wheel unit 300. In this case, the leg unit 200 is coupled to both side surfaces of the robot body 100, and the wheel unit 300 is coupled to the leg unit 200.

### Robot body

The leg unit 100 of the robot 1 according to one embodiment of the present disclosure will be described with reference to FIGS. 1 to 7 as follows.

The robot body 100 may form an exterior of the robot 1. Components constituting the robot 1 may be coupled to the robot body 100.

For example, the leg unit 200 is coupled to each of frames 130 of both side surfaces of the robot body 100. In addition, a bumper 112 may be coupled to a front cover 110 provided on a front surface of the robot body 100.

In particular, functional modules 700 and 800 may be detachably coupled to the robot body 100 according to one embodiment of the present disclosure. Here, the functional modules 700 and 800 may include the upper functional module 700 coupled to an upper portion of the robot body 100 and the lower functional module 800 coupled to a space between a pair of wheels 310.

Therefore, the upper functional module 700 may be detachably coupled to an upper cover 140 disposed at an upper side of the robot body 100. The lower functional module 800 may be detachably coupled to a lower cover 150 disposed at a lower side of the robot body 100.

With this configuration, it is possible to perform various functions by coupling the functional modules 700 and 800 to the robot body 100. In addition, a new function may be added to the function in use by replacing the functional modules 700 and 800, or a new function may be added to the function in use by additionally mounting the functional modules 700 and 800.

In the embodiment of the present disclosure, the robot body 100 may be formed in a shape that has a horizontal width (or a diameter) larger than a vertical height. The robot body 100 may assist the robot 1 to have a stable structure and provide a structure that is advantageous in maintaining balance when the robot 1 moves (travels).

Some components constituting the robot 1 may be accommodated inside the robot body 100. For example, an internal space of the robot body 100 may accommodate one or more motors including a suspension motor MS, one or more sensors, and the battery 560.

The robot body 100 includes a front cover 110. The front cover 110 constitutes a front exterior of the robot 1. That is, the front cover 110 may be disposed at the foremost portion of the robot 1 when the robot 1 travels forward.

For example, the front cover 110 of the robot body 100 may be formed in a flat shape. As another example, the front cover 110 may have a plate shape with a curved surface. As still another example, the front cover 110 may have a plate shape bent at a predetermined angle.

The front cover 110 may be provided with a window 111. The window 111 may be made of a material through which light may transmit. For example, the window 111 may be made of a material through which infrared (IR), visible rays, or ultraviolet (UV) rays may transmit.

The front cover 110 includes an outer surface exposed to the outside of the robot 1 and an inner surface disposed on a back surface of the outer surface.

The bumper 112 may be coupled to the outer surface of the front cover 110. That is, the bumper 112 may be disposed in front of the robot body 100. For example, the bumper 112 may be provided at both end portions of the outer surface of the front cover 110, and a pair of bumpers 112 may be disposed in parallel in a vertical direction.

The bumper 112 may be provided to move relatively with respect to the robot body 100. For example, the bumper 112 may be coupled to the robot body 100 to reciprocate in a front-rear direction of the robot body 100.

The bumper 112 may be coupled along a portion of a front edge of the front cover 110. Alternatively, the bumper 112 may be coupled along the entire edge of the front cover 110. With this configuration, when the robot 1 collides with another object or person, the bumper 112 can protect the robot body 100 and components accommodated inside the robot body 100 by absorbing an impact applied to the robot body 100.

A first camera 531 may be disposed behind the inner surface of the front cover 110. Specifically, the first camera 531 may be disposed immediately behind the window 111. With this configuration, the first camera 531 may detect objects or people disposed in front of the robot 1.

Meanwhile, although not shown, the front cover 110 may include an input unit through which a control command is input from a user, a display unit for visually conveying information about an operating state of the robot 1 to the user, etc. For example, the front cover 110 may include a touch screen for visually displaying the operating state of the robot 1 and allowing the control command to be input from the user.

The robot body 100 includes a rear cover 120.

The rear cover 120 constitutes a rear exterior of the robot 1. For example, the rear cover 120 may be formed in a flat plate shape. As another example, the rear cover 120 may have a plate shape with a curved surface.

A manipulation unit 553 for adjusting power of the robot 1 may be disposed on the rear cover 120.

The manipulation unit 553 may be manipulated by the user, and the robot 1 may be turned on or off by manipulating the manipulation unit 553.

The manipulation unit 553 may be provided on the rear cover 120 to pivot in a left-right direction or provided to pivot in the vertical direction according to an embodiment.

For example, when the user pushes one side of the manipulation unit 553 and the manipulation unit 553 pivots to one side, the robot 1 may be turned on. In addition, when the user pushes the other side of the manipulation unit 553 and the manipulation unit 553 pivots to the other side, the robot 1 may be turned off.

A rear bumper 122 may be coupled to an outer surface of the rear cover 120. That is, the rear bumper 122 may be disposed behind the robot body 100. For example, the rear bumper 122 may be provided on the outer surface of the rear cover 120 and may be disposed in the horizontal direction. With this configuration, when the robot 1 collides with another object or person, the bumper 122 can protect the robot body 100 and the components accommodated inside the robot body 100 by absorbing an impact applied to the robot body 100.

The robot body 100 includes a side frame 130.

The side frame 130 constitutes the exterior of both side surfaces of the robot 1. For example, the side frame 130 may be disposed on each of both side surfaces of the robot 1 and configured to face each other. For example, the side frame 130 may be formed in a flat plate shape. That is, both side surfaces of the robot body 100 may be formed in a flat plate shape and disposed in parallel. As another example, at least a portion of the side frame 130 may be formed in a curved shape.

The side frame 130 is coupled to the front cover 110 and the rear cover 120. The side frame 130 may connect the front cover 110 to the rear cover 120. With this configuration, the robot body 100 may have an internal space surrounded by the front cover 110, the rear cover 120, and the two side frames 130.

The leg unit 200 may be disposed outside the side frame 130. Specifically, a first link 210 and a second link 220 may be rotatably coupled to the outside of the side frame 130.

Generally, in a two-wheeled robot, a support structure is disposed vertically under the robot body to support a load of the robot. However, when the support structure is present vertically under the robot body, there is a limitation in that a space under the robot cannot be used.

To solve this, the robot 1 according to the embodiment of the present disclosure has the leg unit 200 coupled to the side frame 130.

The suspension motor MS may be disposed inside the side frame 130.

Link coupling holes 131 and 132 are formed in the side frame 130. The link coupling holes include the first link coupling hole 131 and the second link coupling hole 132.

The first link coupling hole 131 is formed in a circular hole shape in the side frame 130. At least a portion of the first link 210 may be rotatably accommodated in the first link coupling hole 131. For example, one end portion of the first link 210 may be coupled to a shaft of the suspension motor MS through the first link coupling hole 131.

The second link coupling hole 132 is formed in a circular hole shape in the side frame 130. At least a portion of the second link 220 may be rotatably accommodated in the second link coupling hole 132. For example, the shaft formed at one side of the second link 220 may be rotatably coupled by passing through the second link coupling hole 132.

Meanwhile, the first link coupling hole 131 may be formed to have a larger diameter than the second link coupling hole 132.

The first link coupling hole 131 and the second link coupling hole 132 may be formed at a predetermined interval. For example, the center of the first link coupling hole 131 in a circular hole shape and the center of the second link coupling hole 132 in a circular hole shape may be disposed at the predetermined interval.

The first link coupling hole 131 and the second link coupling hole 132 may be disposed at a predetermined inclination with respect to the ground. For example, in a state in which the robot 1 is placed on the ground, the first link coupling hole 131 may be disposed at a lower side of the side frame 130, and the second link coupling hole 132 may be disposed at an upper rear side of the side frame 130.

With this configuration, the side frame 130 in which the link coupling holes 131 and 132 are formed may function as a kind of link.

Meanwhile, according to an embodiment, a handle hole 133 may be formed in the side frame 130. For example, the handle hole 133 may be formed at an upper front side of the side frame 130. With this configuration, the user may lift the robot body 100 upward by inserting his/her hand into the handle hole 133 and gripping the side frame 130.

The upper cover 140 constitutes an upper exterior of the robot 1. The upper cover 140 is coupled to the front cover 110, the rear cover 120 and the two side frames 130. Therefore, the upper cover 140 may cover an upper side of the internal space surrounded by the front cover 110, the rear cover 120, and the two side frames 130.

In a state in which the robot 1 is placed on the ground, the upper cover 140 may be disposed to be inclined at a predetermined angle with respect to the ground. For example, a front end portion of the upper cover 140 may be disposed closer to the ground than a rear end portion thereof is.

The functional module 700 may be coupled to the upper cover 140. Specifically, the upper functional module 700 may be coupled to the upper cover 140. The upper functional module 700 may be detachably coupled to an upper side of the upper cover 140. For example, a hook accommodation groove 141 may be formed to be hook-coupled to the upper functional module 700 in the upper cover 140. With this configuration, the upper functional module 700 may be coupled to the robot body 100 by only a user's simply operation of pushing the hook of the upper functional module 700 into the hook accommodation groove 141.

The robot body 100 may supply power to the upper functional module 700. Specifically, the upper cover 140 may include a terminal through which power may be supplied to the upper functional module 700.

In addition, the robot body 100 may transmit and receive signals to the upper functional module 700. Specifically, the upper cover 140 may include the terminal through which the signals may be transmitted and received to and from the upper functional module 700.

Meanwhile, in the embodiment of the present disclosure, the terminal through which power may be supplied to the upper functional module 700 and the terminal through which the signals may be transmitted and received to and from the upper functional module 700 may be disposed together on the upper cover 140. For example, the upper cover 140 may include a pogo pin 142 including two power pins and four signal pins.

At least one guide groove 143 may be formed in the upper cover 140. A lower surface of the upper functional module 700 may be coupled to the guide groove 143. With this configuration, the guide groove 143 may guide a coupling location of the upper functional module 700.

The lower cover 150 forms a lower exterior of the robot 1. The lower cover 150 is coupled to the front cover 110, the rear cover 120, and the two side frames 130. Therefore, the lower cover 150 may cover a lower side of the internal space surrounded by the front cover 110, the rear cover 120, and the two side frames 130.

The functional module 800 may be coupled to the lower cover 150. Specifically, the lower functional module 800 may be coupled to a lower surface (bottom surface) of the lower cover 150. The lower functional module 800 may be detachably coupled to a lower side of the lower cover 150. Specifically, the lower cover 150 may include a coupling bar 151 to be latch-coupled to the lower functional module 800.

The coupling bar 151 may be formed in a cylindrical shape and disposed in the left-right direction of the robot 1. In addition, a pair of protrusions connected to the coupling bar 151 may be formed to protrude from the lower cover 150.

The lower cover 150 may include a charging terminal 152. The charging terminal 152 may be disposed on a lower surface of the lower cover 150.

In this case, the charging terminal 152 may be disposed at a location facing the charging terminal provided on a robot charging station (not shown). The charging terminal 152 may be electrically connected to a charging terminal provided on the robot charging station (not shown). The robot 1 may receive power from the robot charging station (not shown) through the charging terminal 152. In addition, the power supplied to the charging terminal 152 may be supplied to the battery 560.

Meanwhile, in general, in the two-wheeled robot, the support structure is disposed vertically under the robot body to support the load of the robot. However, when the support structure is present vertically under the robot body, there is a limitation in that the space under the robot cannot be used.

To solve this, the robot 1 according to one embodiment of the present disclosure has the leg unit 200 disposed on both side surfaces of the robot body 100. Therefore, a module coupling space 153 to which the lower functional module 800 is coupled is formed at the lower side of the lower cover 150.

The module coupling space 153 may be formed between the pair of leg units 200. The module coupling space 153 may be formed between the pair of wheel units 300. For example, the module coupling space 153 may be a space vertically under the coupling bar 151. That is, the module coupling space 153 may be a space having a predetermined width ΔS in the left-right direction.

Therefore, since the lower functional module 800 is coupled to a space between the lower portion of the robot body 100 and the pair of leg units 200, thereby minimizing the volume of the robot 1 in a state in which the lower functional module 800 is mounted thereon.

Meanwhile, although not shown, according to an embodiment, the robot body 100 may further include an external case. The external case may constitute the overall exterior of the robot body 100. The external case may cover the exteriors of the front cover 110, the rear cover 120, the side frame 130, the upper cover 140, and the lower cover 150. For example, the external case may be formed in an elliptical shape formed to extend in the left-right direction.

### Leg unit

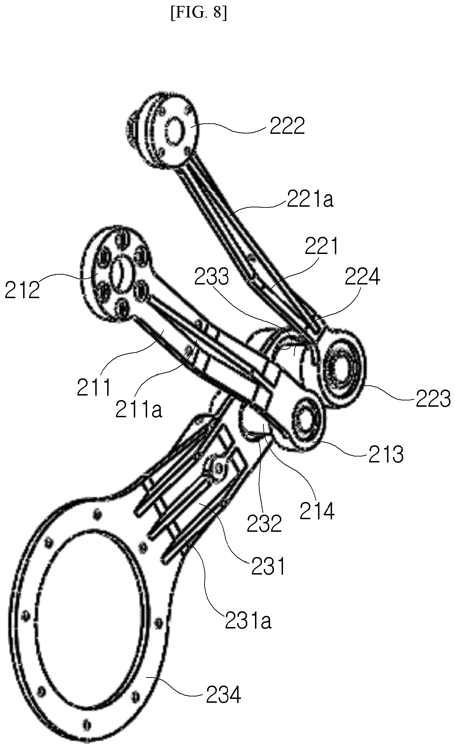

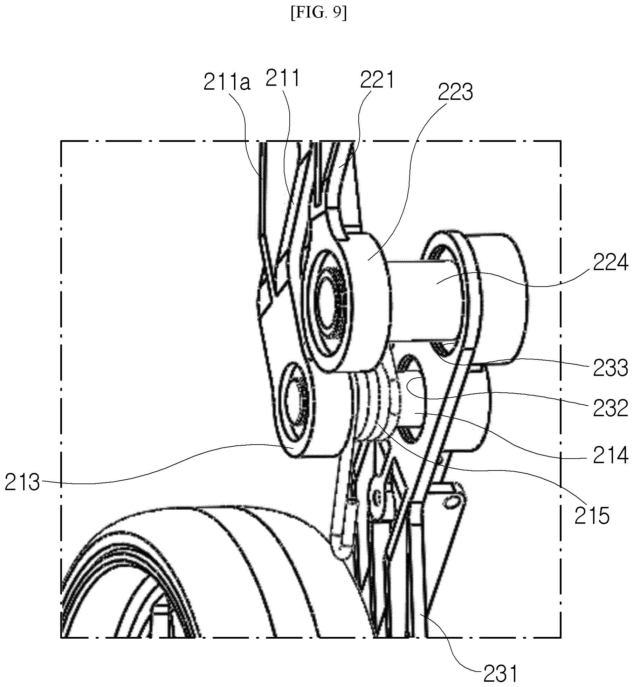

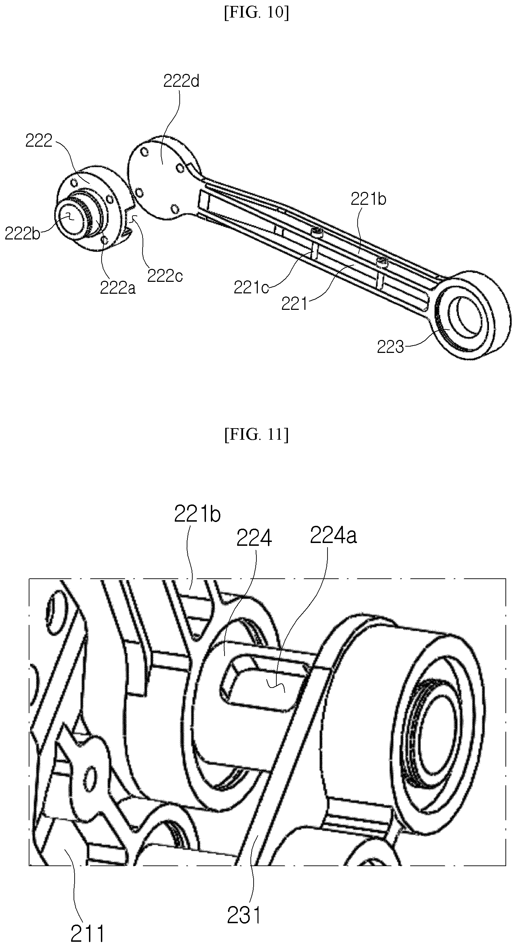

FIG. 8 is a view for describing a leg unit in the robot according to one embodiment of the present disclosure, FIG. 9 is a view for describing a connection relationship of the leg unit in the robot according to one embodiment of the present disclosure, FIG. 10 is a view for describing a second link in the robot according to one embodiment of the present disclosure, and FIG. 11 is a view for describing a structure for hiding an electric wire in the robot according to one embodiment of the present disclosure.

The leg unit 200 of the robot 1 according to one embodiment of the present disclosure will be described with reference to FIGS. 1 to 11 as follows.

The leg unit 200 may be coupled to the robot body 100 to support the robot body 100. For example, a pair of leg units 200 are provided and are each coupled to the side frame 130 of the robot body 100. In this case, at least a portion of the leg unit 200 is disposed closer to the ground than the robot body 100. Therefore, the robot body 100 may travel in the form of standing on the ground by the pair of leg units 200. That is, gravity applied to the robot body 100 may be supported by the leg unit 200, and a height of the robot body 100 can be maintained.

In the robot 1 according to one embodiment of the present disclosure, the leg unit 200 is coupled to only both side surfaces of the robot body 100. That is, the leg units 200 may face each other and may each be coupled to an outermost portion of the robot body 100. Therefore, the leg unit 200 is not coupled to the lower and rear surfaces of the robot body 100.

Therefore, as shown in FIGS. 3 to 18, a space is formed between the lower side of the lower cover 150 and the pair of leg units 200. For example, a space in which a rectangular parallelepiped-shaped lower functional module 800 may be accommodated may be formed between the lower side of the lower cover 150 and the pair of leg units 200.

The leg unit 200 includes the first link 210, the second link 220, and the third link 230. In this case, the first link 210 and the second link 220 are rotatably coupled to the side frame 130 and the third link 230, respectively. That is, the first link 210 and the second link 220 are link-coupled to the side frame 130 and the third link 230, respectively.

The first link 210 is link-coupled to the side surface of the robot body 100. For example, the first link 210 may be link-coupled to the side frame 130.

The first link 210 is connected to the suspension motor MS. For example, the first link 210 may be connected to the shaft of the suspension motor MS directly or through a gear. With this configuration, the first link 210 receives a driving force from the suspension motor MS.

The first link 210 includes a first link body 211, a motor coupling portion 212, and a link coupling portion 213.

The first link body 211 is formed in a frame shape, the motor coupling portion 212 is provided at one side in a longitudinal direction, and the link coupling portion 213 is provided at the other side in the longitudinal direction. In this case, the motor coupling portion 212 may be disposed farther from the ground than the link coupling portion 213.

The first link body 211 may be formed in a shape that is bent at least once. For example, the other side of the first link body 211 provided with the link coupling portion 213 may be disposed farther from the robot body 100 than the one side provided with the motor coupling portion 212.

Therefore, a distance between the pair of first link bodies 211 increases from the top to the bottom in the vertical direction. With this configuration, the first link 210 can stably support the robot body 100.

A rib 211a may be formed on the first link body 211. For example, the rib may be formed to protrude from the first link body 211 in the longitudinal direction. In this case, the rib 211a may be formed in an area in which the first link body 211 is bent. With this configuration, the rib 211a can increase durability by reinforcing the first link 210.

The motor coupling portion 212 is formed on one end portion of the first link body 211.

The motor coupling portion 212 is rotatably accommodated in the first link coupling hole 131 of the side frame 130. For example, the motor coupling portion 212 may be formed in a disk shape or a circular panel shape. In this case, a maximum diameter of the motor coupling portion 212 may be equal to or smaller than a maximum diameter of the first link coupling hole 131. Therefore, the motor coupling portion 212 may be connected to the suspension motor MS through the first link coupling hole 131.

The motor coupling portion 212 is connected to the suspension motor MS. For example, the motor coupling portion 212 is fixedly coupled to the shaft of the suspension motor MS. With this configuration, when the suspension motor MS is driven, the motor coupling portion 212 may be rotated in conjunction with the rotation of the shaft of the suspension motor MS.

The link coupling portion 213 is formed to be connected to the other end portion of the first link body 211.

The link coupling portion 213 is rotatably coupled to the third link 230. Specifically, the link coupling portion 213 is rotatably coupled to the third link 230 through a first link shaft 214. For example, the link coupling portion 213 may be formed in a disk shape, and the first link shaft 214 may be coupled by passing through the center of the link coupling portion 213. In addition, the first link shaft 214 may be rotatably coupled by passing through the third link 230. With this configuration, the first link 210 and the third link 230 may be connected to rotate relatively.

The first link shaft 214 is provided to connect the first link 210 to the third link 230. For example, the first link shaft 214 may be coupled by passing through the link coupling portion 213 of the first link 210 and/or the third link 230. In this case, the first link shaft 214 may be rotatably coupled to the link coupling portion 213 and/or the third link 230. With this configuration, the first link shaft 214 may be an axis about which the third link 230 rotates.

A gravity compensator 215 compensates for the robot body 100 that moves down vertically due to gravity. That is, the gravity compensator 215 provides a force for supporting the robot body 100.

For example, the gravity compensator 215 may be a torsion spring. The gravity compensator 215 may be wound to surround an outer circumferential surface of the first link shaft 214. In addition, one end portion of the gravity compensator 215 is fixedly coupled by being inserted the first link 210, and the other end portion of the gravity compensator 215 is coupled to the third link 230.

The gravity compensator 215 applies a force (rotational force) in a direction in which an angle between the first link 210 and the third link 230 increases. For example, both end portions of the gravity compensator 215 decrease in advance to apply a restoring force in a direction in which the angle between the first link 210 and the third link 230 increases. Therefore, even when the robot 1 is placed on the ground and gravity is applied to the robot body 100, the angle between the first link 210 and the third link 230 can be maintained within a predetermined angle range.

With this configuration, it is possible to prevent the robot body 100 from moving down toward the ground even when the suspension motor MS is not driven. Therefore, the gravity compensator 215 prevents energy loss due to driving the suspension motor MS and maintains the height of the robot body 100 to a predetermined distance or more from the ground.

The second link 220 is link-coupled to the side surface of the robot body 100. For example, the second link 220 may be link-coupled to the side frame 130. That is, the second link 220 may be coupled to the side frame 130 to which the first link 210 is coupled together.

The second link 220 includes a second link body 221, a frame coupling portion 222, and a link coupling portion 223. In this case, the frame coupling portion 222 may be disposed farther from the ground than the link coupling portion 223.

The second link body 221 is formed in a frame shape, the frame coupling portion 222 is provided at one side in a longitudinal direction, and the link coupling portion 223 is provided at the other side in the longitudinal direction.

The second link body 221 may be formed in a shape that is bent at least once. For example, the other side of the second link body 221 provided with the link coupling portion 223 may be disposed farther from the robot body 100 than the one side provided with the frame coupling portion 222. Therefore, a distance between the pair of second link bodies 221 increases from the top to the bottom in the vertical direction. With this configuration, the second link 220 can stably support the robot body 100.

The second link body 221 includes an inner surface facing the robot body 100 and an outer surface facing a direction away from the robot body 100.

A rib 221a may be formed on the second link body 221. For example, the rib 221a may be formed to protrude from the outer surface of the second link body 221 in the longitudinal direction. In this case, the rib 221a may be formed in an area in which the second link body 221 is bent. With this configuration, the rib 221a can increase durability by reinforcing the second link 220.

An electric wire accommodation wall 221b may be formed on the second link body 221. For example, a pair of electric wire accommodation walls 221b may be formed to protrude from the inner surface of the second link body 221 in the longitudinal direction. In this case, the pair of electric wire accommodation walls 221b may be formed in parallel at a predetermined interval. With this configuration, the electric wire may be accommodated in the space surrounded by the second link body 221 and the electric wire accommodation walls 221b. Therefore, it is possible to prevent the electric wire from being exposed to the outside.

Meanwhile, the internal space formed between the pair of electric wire accommodation walls 221b may communicate with an electric wire through hole 222c to be described below. With this configuration, the electric wire passing through the electric wire through hole 222c may be accommodated in the internal space formed between the electric wire accommodation walls 221b, thereby preventing the electric wire from being exposed to the outside.

In addition, the second link 220 may be provided with an electric wire support pin 221c. The electric wire support pin 221c may pass through the pair of electric wire accommodation walls 221b. The electric wire support pin 221c may be disposed in a direction crossing the pair of electric wire accommodation walls 221b. With this configuration, the electric wire accommodation wall 221b may close a portion of an open area in the space surrounded by the second link body 221 and the electric wire accommodation walls 221b. Therefore, it is possible to prevent the electric wire from coming out of the space surrounded by the second link body 221 and the electric wire accommodation walls 221b.

The frame coupling portion 222 is formed on one end portion of the second link body 221.

The frame coupling portion 222 is rotatably coupled to the second link coupling hole 132 of the side frame 130. For example, the frame coupling portion 222 may be provided with a coupling shaft 222a coupled by passing through the side frame 130.

The coupling shaft 222a may be formed in a cylindrical shape. For example, an outer diameter of the other end portion of the coupling shaft 222a may be larger than an outer diameter of one end portion of the coupling shaft 222a coupled to the side frame 130 in an axial direction (longitudinal direction).

A hollow 222b may be formed in the coupling shaft 222a. The electric wire may pass through the hollow 222b. With this configuration, it is possible to prevent the electric wire through which power is supplied from the battery 560 to a wheel motor MW from being exposed to the outside.

In addition, the electric wire through hole 222c may be formed in the coupling shaft 222a. The electric wire through hole 222c may be formed on an outer circumferential surface of the other end portion of the coupling shaft 222a in the axial direction. With this configuration, in the robot body 100, the electric wire passing through the hollow 222b may pass through the electric wire through hole 222c and may be accommodated in the second link body 221.

The coupling shaft 222a may be coupled to a rotational connection plate 222d. For example, the rotational connection plate 222d may be formed in a disk shape, and a diameter of the rotational connection plate 222d may be formed to be smaller than a diameter of the other end portion of the coupling shaft 222a in the axial direction. Therefore, the rotational connection plate 222d may be coupled by being accommodated in the other end portion of the coupling shaft 222a in the axial direction.

The rotational connection plate 222d may be formed integrally with the second link body 221. An outer end portion of the rotational connection plate 222d in a radial direction may be formed to be connected to the second link body 221. With this configuration, the rotational connection plate 222d may couple the second link body 221 to the coupling shaft 222a.

The link coupling portion 223 is formed on the other end portion of the second link body 221.

The link coupling portion 223 is rotatably coupled to the third link 230. Specifically, the link coupling portion 223 is rotatably coupled to the third link 230 through a second link shaft 224. For example, the link coupling portion 223 may be formed in a disk shape, and the second link shaft 224 may be coupled by passing through the center of the link coupling portion 223. In addition, the second link shaft 224 may be rotatably coupled by passing through the third link 230. With this configuration, the second link 220 and the third link 230 may be connected to rotate relatively.

The second link shaft 224 is provided to connect the second link 220 to the third link 230. For example, the second link shaft 224 may be coupled by passing through the link coupling portion 223 of the second link 220 and/or the third link 230. In this case, the second link shaft 224 may be rotatably coupled to the link coupling portion 223 and/or the third link 230. With this configuration, the second link shaft 224 may be an axis about which the third link 230 rotates.

The third link 230 is link-coupled to the first link 210 and the second link 220 and coupled to the wheel unit 300.

The third link 230 includes a third link body 231. The third link body 231 is formed in a frame shape, a third link coupling hole 232 and a fourth link coupling hole 233 are formed at one side thereof in the longitudinal direction, and a wheel coupling portion 234 is formed at the other side in the longitudinal direction.

The third link body 231 may be formed in a shape that is bent at least once. For example, a pair of third link bodies 231 have a distance between the other sides at which the wheel coupling portion 234 is formed, which is shorter than a distance between one sides at which the third link coupling hole 232 and the fourth link coupling hole 233 are formed.

At least one rib 231a may be formed to protrude from the third link body 231 in the longitudinal direction. The rib 231a may be formed in a bent area of the third link body 231. With this configuration, the rib may reinforce the third link body 231.

The third link coupling hole 232 is formed in the third link body 231. Specifically, the third link coupling hole 232 is formed at one side of the third link body 231 in the longitudinal direction. The first link shaft 214 may be rotatably coupled by passing through the third link coupling hole 232. For example, the third link coupling hole 232 may be formed in a circular hole shape. With this configuration, the third link 230 may be rotatably connected to the first link 210 through the first link shaft 214.

A hole into which the gravity compensator 215 is coupled may be formed in the third link body 231. For example, the other end portion of the torsion spring may be coupled by being inserted into the hole.

The fourth link coupling hole 233 is formed in the third link body 231. Specifically, the fourth link coupling hole 233 is formed at one side of the third link body 231 in the longitudinal direction. The second link shaft 224 may be rotatably coupled by passing through the fourth link coupling hole 233. For example, the fourth link coupling hole 233 may be formed in a circular hole shape. With this configuration, the third link 230 may be rotatably connected to the second link 220 through the second link shaft 224.

The fourth link coupling hole 233 may be disposed farther from the wheel coupling portion 234 than the third link coupling hole 232.

The third link 230 is coupled to the wheel unit 300. In this case, a wheel housing 320 is coupled to an inner surface (surface facing the robot body 100) of the third link body 231, and the wheel 310 is rotatably coupled to an outer surface (back surface of the inner surface) of the third link body 231.

Meanwhile, the wheel coupling portion 234 is formed on the third link body 231. Specifically, the wheel coupling portion 234 is formed at the other side of the third link body 231 in the longitudinal direction.

For example, the wheel coupling portion 234 may be formed in a circular hole shape. The wheel motor MW may be accommodated in the wheel coupling portion 234.

Meanwhile, in a state in which the robot 1 stands on the ground, the wheel coupling portion 234 may be disposed vertically under the robot body 100. For example, in the state in which the robot 1 stands on the ground, the wheel coupling portion 234 may be disposed vertically under the suspension motor MS.

The suspension motor MS is relatively heavy among the components accommodated in the robot body 100. Therefore, the entire weight of the robot body 100 may be concentrated vertically under the suspension motor MS.

With this configuration, the wheel 310 coupled to the wheel coupling portion 234 can maintain the balance of the robot body 100 by supporting a lower side of the center of gravity of the robot body 100.

### Wheel unit

Referring to FIGS. 1 to 7, the wheel unit 300 may be rotatably coupled to the leg unit 200 and may roll along the ground to move the robot body 100 and the leg unit 200.

The wheel unit 300 is rotatably coupled to the leg unit 200. In this case, at least a portion of the wheel unit 300 is disposed closer to the ground than the leg unit 200 is. Therefore, the wheel unit 300 may be disposed between the leg unit 200 and the ground.

The wheel unit 300 includes the wheel 310 that is in contact with the ground and rolls along the ground, and the wheel housing 320 in which the wheel motor MW is accommodated.

The wheel 310 is provided to have a predetermined radius and a predetermined width in the axial direction. As shown in FIG. 3, when viewing the robot 1 from the front, the side frame 130 and the leg unit 200 may be disposed vertically above the wheel 310. In addition, as shown in FIG. 5, when viewing the side surface of the robot 1, the suspension motor MS, the first link coupling hole 131, and the second link coupling hole 132 may be disposed vertically above the wheel 310.

In addition, referring to FIG. 2, the suspension motor MS, the first link coupling hole 131, and the second link coupling hole 132 may be disposed vertically above the wheel 310.

The wheel 310 includes a wheel frame 311 formed in a circular shape. The wheel frame 311 may be formed in a cylindrical shape with an open one side facing the shaft of the wheel motor MW. Therefore, a weight of the wheel frame 311 can be reduced.

However, when the wheel frame 311 is formed in a cylindrical shape, the overall rigidity of the wheel frame 311 can be reduced. In consideration of such a point, the rib (not shown) for reinforcing rigidity may be formed on each of the inner and outer surfaces of the wheel frame 311.

A wheel tire 312 is coupled to an outer circumferential surface of the wheel frame 311. The wheel tire 312 may be formed in an annular shape with a diameter of the wheel tire 312 fitted into the outer circumferential surface of the wheel frame 311.

Grooves of a predetermined pattern may be recessed in the outer circumferential surface of the wheel tire 312 to increase a grip force of the wheel tire 312.

In one embodiment, the wheel tire 312 may be made of an elastic rubber material.

The wheel housing 320 may have a cylindrical shape with an open one side in the axial direction so that the wheel motor MW is accommodated therein. In this case, a closed portion of the wheel housing 320 may be coupled to an inner surface of the third link 230. With this configuration, it is possible to prevent an external foreign substance from flowing into the wheel housing 320.

Meanwhile, the wheel housing 320 may be provided with a sensor for measuring a distance to the ground. For example, the sensor may be a time of flight sensor (ToF sensor). With this configuration, a controller 510 may determine whether the wheel 310 is in contact with the ground.

The wheel 310 is rotatably coupled to the leg unit 200. Specifically, the wheel 310 is rotatably coupled to an outer surface (surface facing the outside of the robot 1) of the third link 230.

The wheel motor MW may provide a driving force to the wheel 310. The wheel motor MW may generate a rotational force by receiving power from the battery 560.

The wheel motor MW may be accommodated in the wheel housing 320. In addition, the wheel motor MW may pass through the wheel coupling portion 234 of the third link 230, and the shaft of the wheel motor MW may be coupled to the wheel frame 311 of the wheel 310. That is, the wheel motor MW may be an in-wheel motor.

With this configuration, when the wheel motor MW is driven, the wheel 310 may roll along the ground while rotating, and the robot 1 may move along the ground.

### Upper functional module

The upper functional module 700 of the robot 1 according to one embodiment of the present disclosure will be described with reference to FIGS. 1 to 7 as follows.

The upper functional module 700 may be detachably coupled to the upper cover 140 of the robot body 100. The upper functional module 700 may be provided in various forms according to functions.

As an example, the upper functional module may be a flat plate shape so that an object such as a mobile phone may be placed thereon. In this case, a wireless charging unit may be provided in the upper functional module. The wireless charging unit may charge a mobile phone, etc. mounted on the upper functional module by generating an induction current.

As another example, the upper functional module may have a shape provided with an accommodation groove so that cans, bottles, cups, etc. containing a fluid may be placed thereon and transported. In this case, a temperature control unit may be provided in the upper functional module. The temperature control unit may discharge or absorb heat using electrical energy and cool or warm cans, bottles, cups, etc. accommodated in the upper functional module.

As another example, the upper functional module 700 may be an interaction upper functional module provided to visually and audibly display a response of the robot 1 for emotional interaction with a user.

In this case, the interaction upper functional module 700 may include a display. The display may display facial expressions or eye shapes so that the user may feel that he/she is interacting with the robot 1. In this case, the display of the interaction upper functional module may rotate at a preset angle.

An upper plate motor 525 may provide a driving force to the display of the interaction upper functional module. The upper plate motor 525 may be disposed in the upper functional module. More specifically, a final output stage of a shaft or gear of the upper plate motor 525 is connected to the display. The upper plate motor 525 may be rotated by being driven according to a control command of the controller 510, and the display may rotate according to the rotation of the upper plate motor 525.

The upper functional module 700 may receive power from the robot body 100. Although not shown, the upper functional module 700 may be provided with a terminal that may be electrically connected to the robot body 100.

In addition, the upper functional module 700 may transmit and receive a signal to and from the robot body 100. Specifically, although not shown, the upper functional module 700 may be provided with a terminal capable of transmitting and receiving the signal to and from the robot body 100.

Meanwhile, in an embodiment of the present disclosure, a terminal capable of receiving power from the robot body 100 and the terminal capable of transmitting and receiving the signal to and from the robot body 100 may be disposed in the upper functional module 700 together. For example, the upper functional module 700 may be provided with a terminal (not shown) at a location facing the pogo pin 142 of the robot body 100.

### Control configuration

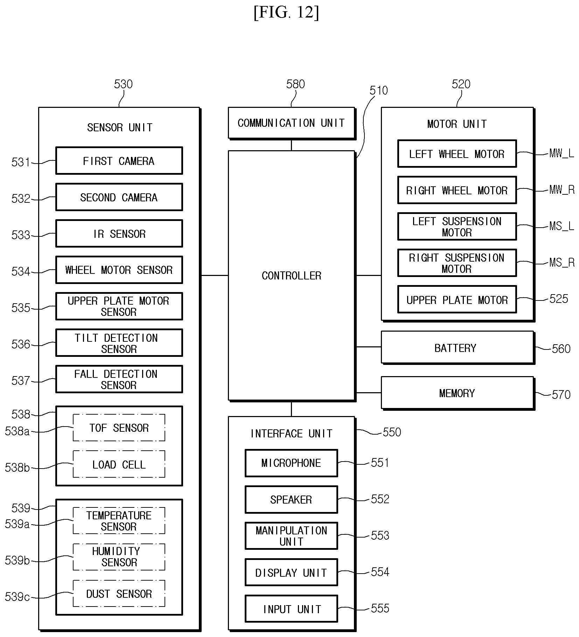

FIG. 12 is a block diagram for describing a control configuration of the robot according to one embodiment of the present disclosure.

Referring to FIG. 12, the robot 1 according to the embodiment of the present disclosure may include the controller 510, a motor unit 520, a sensor unit 530, an interface unit 550, the battery 560, a memory 570, and a communication unit 580.

Since components shown in the block diagram of FIG. 12 are not essential in implementing the robot 1, the robot 1 described herein may have a larger or fewer number of components than the components listed above.

First, the controller 510 may control the overall operation of the robot 1. The controller 510 may control the robot 1 to perform various functions according to setting information stored in the memory 570 to be described below.

The controller 510 may be disposed on the robot body 100. More specifically, the controller 510 may be provided by being mounted on a printed circuit board (PCB) disposed between the left wheel 310 and the right wheel 310.

The controller 510 may include all types of devices capable of processing data, such as a processor. Here, "processor" may be, for example, a data processing device built into hardware, which has a physically structured circuit to perform a function expressed by code or commands included in a program. As an example of the data processing device built into hardware, processing devices such as a microprocessor, a central processing unit (CPU), a processor core, a multiprocessor, an application-specific integrated circuit (ASIC), and a field programmable gate array (FPGA) may be included, but the scope of the present disclosure is limited thereto.

The controller 510 may receive information about an external environment of the robot 1 from at least one component of the sensor unit 530 to be described below. In this case, the information about the external environment may be, for example, information such as a temperature, humidity, and amount of dust in an interior where the robot 1 travels. Alternatively, the information may be, for example, cliff information. Alternatively, the information may be, for example, interior map information. Of course, the information about the external environment is not limited to the above examples.

The controller 510 may receive information about a current state of the robot 1 from at least one component of the sensor unit 530 to be described below. In this case, the current state may be, for example, tilt information of the robot body 100. Alternatively, the information may be, for example, information about a separation state between the wheel 310 and the ground. Alternatively, the information may be, for example, location information of the wheel motor MW. Alternatively, the information may be, for example, location information of the suspension motor MS. Of course, information about the current state of the robot 1 is not limited to the above examples.

The controller 510 may transmit a driving control command to at least one of components of the motor unit 520 to be described below. For example, the rotation of the wheel motor MW may be controlled for the traveling of the robot 1. Alternatively, for example, the rotation of the wheel motor MW may be controlled to maintain the horizontal attitude of the robot 1. Alternatively, for example, the rotation of the suspension motor MS may be controlled to maintain the horizontal attitude of the robot 1. Alternatively, for example, the rotation of the upper plate motor 525 may be controlled to adjust an angle of the upper functional module of the robot 1.

The controller 510 may receive a user's command through at least one of components of the interface unit 550 to be described below. For example, the command may be a command for turning on/off the robot 1. Alternatively, for example, the command may be a command for manually controlling various functions of the robot 1.

The controller 510 may output information related to the robot 1 through at least one of the components of the interface unit 550 to be described below. For example, the output information may be visual information. Alternatively, for example, the output information may be auditory information.

The motor unit 520 may include at least one motor and provide a driving force to a component connected to each motor.

The motor unit 520 may include the wheel motor MW for providing a driving force to the left and right wheels 310. More specifically, the motor unit 520 may include a left wheel motor MW_L for transmitting a driving force to the left wheel 310 and a right wheel motor MW_R for transmitting a driving force to the right wheel 310.

The wheel motors MW may be disposed in the wheel units 300, respectively. More specifically, the wheel motor MW may be accommodated in the wheel housing 320. The wheel motor MW may be accommodated in the wheel coupling portion 234.

The wheel motor MW is connected to the wheel 310. More specifically, a final output stage of a shaft or gear of the left wheel motor MW_L is connected to the left wheel 310. A final output stage of a shaft or gear of the right wheel motor MW_R is connected to the right wheel 310. Each of the left and right wheel motors MW rotates by being driven according to the control command of the controller 510, and the robot 1 travels along the ground due to the rotation of the wheel 310 according to the rotation of the wheel motor MW.

The motor unit 520 may include the suspension motor MS for providing a driving force to the left and right leg units 200. More specifically, the motor unit 520 may include a left suspension motor MS_L for transmitting a driving force to the left leg unit 200 and a right suspension motor MS_R for transmitting a driving force to the right leg unit 200.

The suspension motor MS may be disposed on the robot body 100. More specifically, the suspension motor MS may be disposed inside each of the side frames 130.

The suspension motor MS is connected to the first link 210. More specifically, a final output stage of a shaft or gear of the left suspension motor MS_L is connected to the left first link 210. A final output stage of a shaft or gear of the right suspension motor MS_R is connected to the right first link 210. Each of the left and right suspension motors MS rotates by being driven according to the control command of the controller 510, and as the first link 210 rotates according to the rotation of the suspension motor MS and the third link 230 connected to the first link 210 rotates, as a result, the wheel 310 connected to the third link 230 moves upward or downward.

Therefore, the robot 1 may lift or lower the wheel 310 and maintain a horizontal attitude when climbing an obstacle or traveling along a curved ground.

The motor unit 520 may include the upper plate motor 525 for providing a driving force to the upper functional module. The upper plate motor 525 may be a servo motor. The servo motor is a well-known motor used where rotation angle control is required and has a limited operating range but has an advantage in that accurate position control is possible.

The upper plate motor 525 may provide a driving force to the display of the interaction upper functional module. The upper plate motor 525 may be disposed in the upper functional module. More specifically, the final output stage of the shaft or gear of the upper plate motor 525 is connected to the display. The upper plate motor 525 may be rotated by being driven according to a control command of the controller 510, and the display may rotate according to the rotation of the upper plate motor 525.

The sensor unit 530 may include at least one sensor, and each sensor may measure or detect information about an external environment of the robot 1 and/or information about a current state of the robot 1.

The sensor unit 530 may include the first camera 531.

The first camera 531 may be a mapping camera. The first camera 531 is provided to map an interior in which the robot 1 travels.

To this end, the first camera 531 may be disposed in front of the robot body 100. More specifically, the first camera 531 may be disposed behind the inner surface of the front cover 110. The first camera 531 may be disposed behind the window 111.

The first camera 531 may photograph the interior while traveling to perform simultaneous localization and mapping (SLAM). The controller 510 may implement the SLAM based on information about the surrounding environment photographed by the first camera 531 and information about the current location of the robot 1.

Meanwhile, a method in which the robot 1 according to the embodiment of the present disclosure implements the SLAM may be a method implemented using only the first camera 531, but is not limited thereto. For example, the robot 1 may implement the SLAM further using an additional sensor. The additional sensor may be, for example, a laser distance sensor (LDS).

The sensor unit 530 may include a second camera 532.

The second camera 532 is a component provided to recognize a user's location and/or face.

To this end, the second camera 532 may be disposed in the upper functional module. More specifically, the second camera 532 may be disposed adjacent to the display of the upper functional module. The second camera 532 may be disposed on an upper portion of the display. The second camera 532 may be disposed between left and right speakers 552.

The second camera 532 may recognize the user's location by capturing a forward image of the display. To this end, the second camera 532 may include a depth module and an RGB module.

The depth module may acquire depth information of the image. For example, the depth information may be obtained in a manner of acquiring moving time information by measuring a retardation or phase shift of a modulated optical signal for all pixels of the captured image.

The RGB module may acquire color images (images). Edge characteristics, color distribution, frequency characteristics or wavelet transform, etc. may be extracted from the color images.

As described above, whether a user is present in front or the user's location may be recognized by acquiring distance information about an object to be recognized through the depth information from the forward image captured by the second camera 532 and calculating the edge characteristics, etc. extracted from the color images together.

The sensor unit 530 may include an IR sensor 533 for detecting infrared rays.

The IR sensor 533 may be an IR camera for detecting infrared rays.

The IR sensor 533 may be disposed on the robot body 100. More specifically, the IR sensor 533 may be disposed behind the inner surface of the front cover 110. The IR sensor 533 may be disposed behind the window 111. The IR sensor 533 may be disposed in a left-right direction or vertical direction from the first camera 532.

The robot may approach the module by allowing the IR sensor 533 to detect infrared rays emitted by an IR LED provided in a specific module. For example, the module may be a charging station for charging the robot 1. For example, the module may be a lower functional module detachably provided on the lower cover 150 of the robot 1.

The controller 510 may control the IR sensor 533 to start detecting the IR LED when a charging state of the robot 1 is a preset level or less. The controller 510 may control the IR sensor 533 to start detecting the IR LED when a command to find a specific module is received from a user.

The sensor unit 530 may include a wheel motor sensor 534.

The wheel motor sensor 534 may measure the location of the wheel motor MW. For example, the wheel motor sensor 534 may be an encoder. As is well known, the encoder may detect the location of the motor and also detect a rotational speed of the motor.

The wheel motor sensor 534 may be disposed on each of the left and right wheel motors MW. More specifically, the wheel motor sensor 534 may be connected to the final output end of the shaft or gear of the wheel motor MW and accommodated inside the wheel housing 320 together with the wheel motor MW.

The sensor unit 530 may include an upper plate motor sensor 535.

The upper plate motor sensor 535 may measure a rotation angle of the display of the interaction upper functional module. For example, the upper plate motor sensor 535 may be a potentiometer for measuring a rotation angle.

The upper plate motor sensor 535 may be disposed in the interaction upper functional module. More specifically, the upper plate motor sensor 535 may be connected to the final output stage of the shaft or gear of the upper plate motor 525 and disposed behind the display together with the upper plate motor 525.

The sensor unit 530 may include a tilt detection sensor 536.

The tilt detection sensor 536 may measure a tilt angle of the robot body 100.

The tilt detection sensor 536 may be, for example, a three-axis acceleration sensor. The acceleration sensor is a sensor for detecting a gravitational acceleration of an object in a stationary state. Since the gravitational acceleration varies depending on a tilt angle of the object, the tilt angle is obtained by measuring the gravitational acceleration. However, there is a disadvantage in that a correct value cannot be obtained in a moving acceleration state rather than a stationary state.

The tilt detection sensor 536 may be, for example, a three-axis gyro sensor. The gyro sensor is a sensor for measuring an angular velocity. A tilt angle is obtained by integrating the angular velocity over the entire time. However, continuous errors occur in the angular velocity measured by the gyro sensor due to noise and other reasons, and due to these errors, an error in an integral value accumulatively occurs over time.

As a result, when a long time elapses in a stationary standby state, the tilt of the robot 1 may be accurately measured by the acceleration sensor, but an error is caused by the gyro sensor. While traveling, an accurate tilt value of the robot 1 may be measured using the gyro sensor, but a correct value cannot be obtained using the acceleration sensor.

Preferably, the tilt detection sensor 536 may be an inertial measurement unit (IMU) sensor. As is well known, the IMU sensor is a sensor in which a three-axis acceleration sensor, a three-axis gyro sensor, and a geomagnetic sensor are embedded together and is also referred to as an inertial measurement sensor. The disadvantages of the above-described acceleration sensor and gyro sensor may be compensated using the IMU sensor.

Hereinafter, in the present specification, an embodiment in which the IMU sensor is provided as the tilt detection sensor 536 will be described.

The IMU sensor may be disposed on the robot body 100. More specifically, the IMU sensor may be disposed adjacent to the controller 510. The IMU sensor may be provided by being mounted on a PCB inside the robot body 100. To increase the measurement accuracy of the tilt angle and direction, the IMU sensor is preferably disposed close to a central area of the robot body 100.

The IMU sensor may measure at least one of the three-axis acceleration, the three-axis angular velocity, and the three-axis geomagnetic data of the robot body 100 and transmit the same to the controller 510.

The controller 510 may calculate the tilted direction and angle of the robot body 100 using at least one of the acceleration, angular velocity, and geomagnetic data received from the IMU sensor. Based on the same, the controller 510 may perform control of maintaining the horizontal attitude of the robot body 100 to be described below.

The sensor unit 530 may include a fall prevention sensor 537 for detecting a cliff.

The fall prevention sensor 537 may be configured to detect a distance to the ground in front of the robot 1 along which it travels. The fall prevention sensor 537 may be configured in various ways within a range in which a relative distance between a point at which the fall prevention sensor 537 is formed and the ground may be detected.

For example, the fall prevention sensor 537 may include a light emitting unit for emitting light and a light receiving unit for receiving reflected light. The fall prevention sensor 537 may be configured as an infrared sensor. The fall prevention sensor 537 may be referred to as a cliff sensor.

The fall prevention sensor 537 may be disposed on the robot body 100. More specifically, the fall prevention sensor 537 may be disposed inside the front cover 110 of the robot body 100. Preferably, the fall prevention sensor 537 may be disposed inside a downward slope provided on the front cover 110. Therefore, the fall prevention sensor 537 may radiate light toward a front floor surface of the robot 1. That is, the fall prevention sensor 537 disposed inside the front slope may detect in advance whether a cliff is present in front of the robot 1 in a proceeding direction.

The light emitting unit of the fall prevention sensor 537 may radiate light obliquely toward the front floor surface. The light receiving unit of the fall prevention sensor 537 may receive light incident by being reflected from the floor surface. A distance between the front ground and the fall prevention sensor 537 may be measured based on a difference between a radiation time point and a reception time point of light.

When the distance measured by the fall prevention sensor 537 exceeds a predetermined value or exceeds a predetermined range, there may be a case where the front ground is suddenly lowered. With this principle, a cliff may be detected.

When the cliff is detected ahead, the controller 510 may control the wheel motor MW so that the robot 1 travels while avoiding the detected cliff. In this case, control of the wheel motor MW may be stop control. Alternatively, control of the wheel motor MW may be change control of a rotation direction.

The fall prevention sensor 537 may be additionally disposed inside the rear cover 120 of the robot body 100. Preferably, the fall prevention sensor 537 may be disposed inside a downward slope provided on the rear cover 120. Therefore, the fall prevention sensor 537 may radiate light toward a rear floor surface of the robot 1. That is, the fall prevention sensor 537 disposed inside the rear slope may detect in advance whether a cliff is present behind the robot 1 when the robot 1 travels backward.

The sensor unit 530 may include a contact detection sensor 538.

The contact detection sensor 538 may detect whether the wheel 310 has been in contact with the ground.

The contact detection sensor 538 may include a time of flight (TOF) sensor 538a for measuring a separation distance between the wheel 310 of the robot 1 and the ground. The TOF sensor 538a may be a three-dimensional (3D) camera to which a TOF technology is applied. As is well known, the TOF technology is a technology of measuring a distance to an object based on a round-trip flight time in which light radiated toward the object is reflected and returned.

The TOF sensor 538a may be disposed on the wheel unit 300. For example, the contact detection sensor 538 may be disposed on each of the left and right wheel housings 320. Whether the wheel 310 is in contact with the ground may be determined through the distance to the ground measured by the TOF sensor 538a. When the distance measured by the TOF sensor 538a is less than a preset distance (or less than the lower limit of a preset distance range), the wheel 310 is in a state of being in contact with the ground. When the distance measured by the TOF sensor 538a is the preset distance or more (or the upper limit or more of the preset distance range), the wheel 310 is in a state of being spaced from the ground.

The contact detection sensor 538 may include a load cell 538b that measures a magnitude of a force applied to some components of the robot 1.

As is well known, when the force is applied to the load cell 538b, a resistance value of a strain gauge provided on the surface changes. In this case, the magnitude of the force applied to the load cell 538b may be measured by changing the resistance value.

The load cell 538b may be disposed on the leg unit 200. Preferably, the load cell 538b may be disposed on each of the left and right third link bodies 231. While the wheel 310 is in a state of being in contact with the floor, the third link 230 is deformed by applying a normal force from the ground. A measured value of the load cell 538b is shown as a value different from an initial value depending on the deformation of the third link 230. Therefore, it may be determined whether the wheel 310 is in a state of being in contact with the ground.

The sensor unit 530 may include an environmental sensor 539.

The environmental sensor 539 may be configured to measure various environmental states outside the robot 1, that is, at home in which the robot 1 travels. The environmental sensor 539 may include at least one of a temperature sensor 539a, a humidity sensor 539b, and a dust sensor 539c.

The environmental sensor 539 may be disposed on the robot body 100. More specifically, the environmental sensor 539 may be disposed behind the robot body 100. As a possible embodiment, information measured by the environmental sensor 539 may be visually displayed on a display unit 554.

The interface unit 550 may include at least one component for interaction between the user and the robot 1, and each component may be provided to input a command from the user and/or output information to the user.

The interface unit 550 may include a microphone 551.

The microphone 551 is a component for recognizing the user's voice and may be provided in plural. The microphone 551 may be disposed in the upper functional module. More specifically, the microphone 551 may be disposed in the interaction upper functional module. The microphone 551 may be disposed adj acent to the display of the interaction upper functional module. Preferably, a total of four microphones 551 may be disposed with two microphones disposed on each of upper and lower portions of the display.

A voice signal received by the microphone 551 may be used to track the user's location. In this case, a known sound source tracking algorithm may be applied. For example, the sound source tracking algorithm may be a three-point measurement method (triangulation method) using a time difference in which a plurality of microphones 551 receive voice signals. The principle is that a location of the voice source is calculated using a location of each microphone 551 and a speed of a sound wave.

Meanwhile, when the microphone 551 cooperates with the second camera 532, the robot 1 may be implement to find the user's location even when the user calls the robot 1 from a distance.

The interface unit 550 may include a speaker 552.

The speaker 552 may be disposed in the upper functional module. For example, the speaker 552 may be disposed adj acent to the display of the interaction upper functional module. The speaker 552 may be disposed on the upper portion of the display and provided at each of left and right sides thereof.

The speaker 552 may transmit information about the robot 1 as sound. The source of the sound transmitted by the speaker 552 may be sound data previously stored in the robot 1. For example, the pre-stored sound data may be voice data of the robot 1. For example, the pre-stored sound data may be a notification sound that guides the state of the robot 1.

The interface unit 550 may include the manipulation unit 553.

The manipulation unit 553 may receive a command that controls the power of the robot 1 to be turned on/off from the user.

A power-on operation may mean supplying power to the controller 510. A power-off operation may mean cutting-off the power supply to the controller 510. The power is suppled from the battery 560.

The power-off of the robot 1 through the manipulation unit 553 may mean complete power cutoff and have a different meaning from a power saving mode that temporarily stops power supply to each functional module. Control of the power saving mode may be performed by the controller 510 in a power-on state.

Meanwhile, since it is rare to completely cut off the power supply to the robot 1 serving as a pet or butler, it is preferable that the manipulation unit 553 is disposed behind the robot body 100.

The user's command to the manipulation unit 553 may be an operation of pivoting the manipulation unit 553 in the vertical direction or left-right direction. When the manipulation unit 553 is pivoted to one side by the user, the robot 1 may be turned on. When the manipulation unit 553 is pivoted by the user to the other side opposite to the one side, the robot 1 may be turned off.

However, a form of the manipulation unit 553 is not limited. As another example, the manipulation unit 553 may be a button for receiving an on/off command through the user's push operation. As another example, the manipulation unit 553 may be a sliding button for receiving the on/off command through the user's sliding operation. As still another example, the manipulation unit 553 may be a touch screen for receiving the on/off command through the user's touch operation.

The interface unit 550 may include the display unit 554 and an input unit 555.

The display unit 554 may include a display disposed in one or more modules. The display unit 554 may include a first display disposed on the front cover 110 of the robot body 100. The display unit 554 may include a second display disposed in the upper functional module.

The first and second displays may be formed as any one of a light emitting diode (LED), a liquid crystal display (LCD), a plasma display panel, and an organic light emitting diode (OLED).

Information such as operating time information of the robot 1 and power information of the battery 560 may be displayed on the first display or the second display.

The facial expression of the robot 1 may be displayed on the second display. Alternatively, the eyes of the robot 1 may be displayed on the second display. The current state of the robot 1 may be expressed by being personified as emotions through a facial shape or eye shape displayed on the second display. For example, when the user returns home after going out, a smiling facial expression or smiling eye shape may be displayed on the second display. Therefore, the user may feel the interaction with the robot 1.

The input unit 555 may be configured to receive a control command for controlling the robot 1 from the user. For example, the control command may be a command for changing various settings of the robot 1. For example, the settings may be voice volume, display brightness, power saving mode settings, etc.

The input unit 555 may be disposed on the front cover 110 of the robot body 100. The input unit 555 may be disposed adjacent to or on the first display.

The input unit 555 generates key input data input by the user to control the operation of the robot 1. To this end, the input part 555 may be composed of a key pad, a dome switch, a touch pad (static pressure/electrostatic), etc. In particular, when the touch pad forms a layered structure with the first display, this may be referred to as a touch screen.

The battery 560 is configured to supply power to other components constituting the robot 1.

The battery 560 may be disposed on the robot body 100. More specifically, the battery 560 may be disposed at the rear side of the robot body 100. The battery 560 may be disposed behind the suspension motor MS.

The battery 560 may be charged by an external power source, and to this end, a charging terminal 152 for charging the battery 560 may be provided at one side of the robot body 100 or on the battery 560. As in the embodiment of the present disclosure, the charging terminal 152 may be disposed on the lower cover 150 of the robot body 100. Therefore, the robot 1 may be easily coupled to the charging station in a manner of approaching the charging station and seating the charging terminal 152 on the corresponding terminal of the charging station from the top.

The memory 570 is a component for storing various pieces of data for driving and operating the robot 1.

The memory 570 may store an application program and various pieces of data for autonomous driving of the robot 1. The memory 570 may also store pieces of data sensed by the sensor unit 530 and setting information for various settings selected or input by the user.

The memory 570 may include magnetic storage media or flash storage media, but the scope of the present disclosure is not limited thereto. The memory 570 may include an internal memory and/or an external memory and include volatile memories such as DRAMs, SRAMs, or SDRAMs, non-volatile memories such as one time programmable ROMs (OTPROMs), PROMs, EPROMs, EEPROMs, mask ROMs, flash ROMs, NAND flash memories, or NOR flash memories, flash drives such as SSD, compact flash (CF) cards, SD cards, Micro-SD cards, Mini-SD cards, XD cards, or memory sticks, or storage devices such as HDDs.

The memory 570 may be included in the controller 510 or provided as a separate component.

The communication unit 580 may be provided to transmit signals between internal components of the robot 1. The communication unit 580 may support, for example, controller area network (CAN) communication. The signals may be, for example, control commands transmitted from the controller 510 to another component.

The communication unit 580 may support wireless communication with other devices present outside the robot 1. A short-range communication module or a long-distance communication module may be provided as a wireless communication module for supporting wireless communication.

The short-distance communication may be, for example, Bluetooth communication, near field communication (NFC), etc.

The long-distance communication may be, for example, Wireless LAN (WLAN), Digital Living Network Alliance (DLNA), Wireless Broadband (Wibro), World Interoperability for Microwave Access (WiMAX), Global System for Mobile communication (GSM), Code Division Multi Access (CMDA), CDMA2000, Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), IEEE 802.16, Long Term Evolution (LTE), Long Term Evolution-Advanced (LTEA), Wireless Mobile Broadband Service (WMBS), Bluetooth Low Energy (BLE), Zigbee, Radio Frequency (RF), or Long Range (LoRa).

### Balance of robot by four-bar linkage

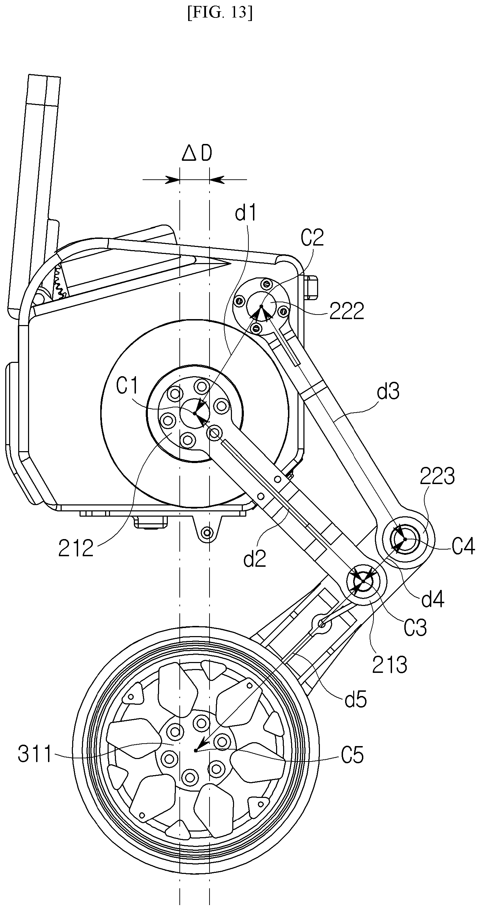

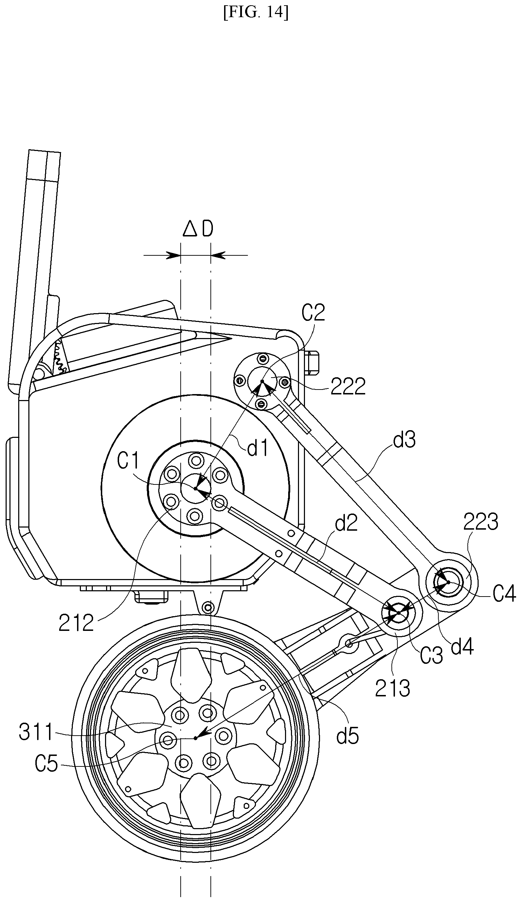

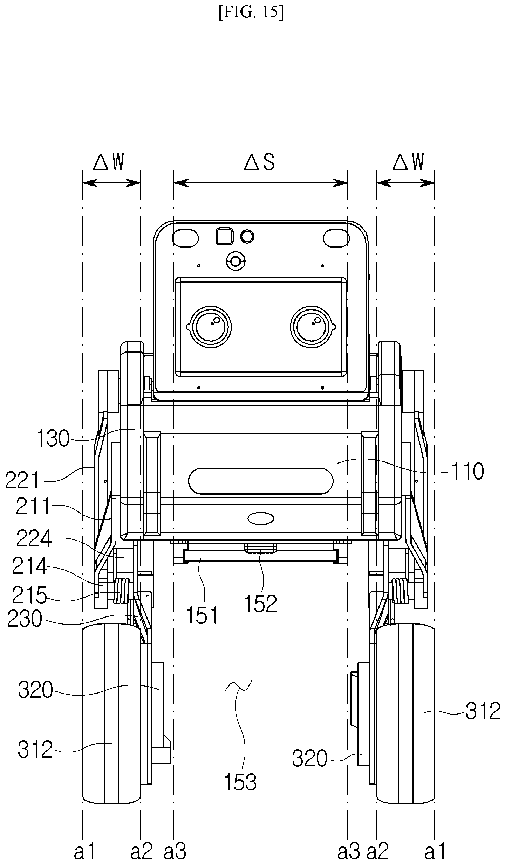

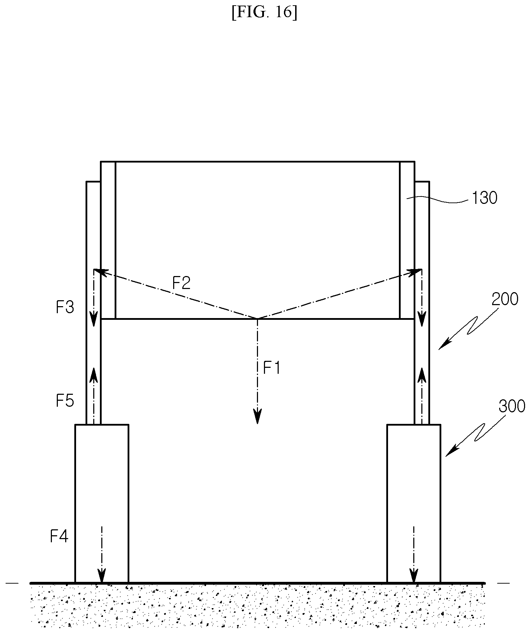

FIGS. 13 and 14 are views for describing a change in location of a wheel according to the movement of the leg unit in the robot according to one embodiment of the present disclosure, FIG. 15 is a view for describing a relationship between the arrangement of the wheel and the arrangement for coupling with a lower functional module in the robot according to one embodiment of the present disclosure, and FIG. 16 shows a schematic view for describing that a load of the robot body is transmitted to wheels in the robot body according to one embodiment of the present disclosure.

Referring FIGS. 12 to 14, the balance of the robot 1 according to one embodiment of the present disclosure will be described as follows.

The robot 1 according to the embodiment of the present disclosure may support the robot body 100 through the four-bar linkage structure and maintain the balance of the robot body 100.

The balance of the robot 1 in the front-rear direction according to one embodiment of the present disclosure will be described with reference to FIGS. 13 and 14 as follows.

The leg unit 200 is provided on each of both side surfaces of the robot body 100. Specifically, the first link 210 and the second link 220 are rotatably coupled to the side frames 130 provided at both sides of the robot body 100, and the first link 210 and the second link (220) is link-coupled to the third link 230. That is, the robot 1 supports the robot body 100 through the four-bar linkage composed of the side frame 130, the first link 210, the second link 220, and the third link 230.

In this case, when viewing the side surface of the robot body 100 as shown in FIGS. 13 and 14, the robot body 100 may be disposed vertically above the wheel 310. With this configuration, the wheel 310 can stably support the load of the robot body 100.

In particular, the motor coupling portion 212 may be disposed vertically above the wheel 310. With this configuration, the wheel 310 can stably support the motor coupling portion 212 to which the load of the robot body 100 is intensively transmitted and maintain the balance of the robot 1.

Meanwhile, when viewing the side surface of the robot body 100 as shown in FIGS. 12 and 13, the coupling bar 151 may be disposed vertically above the wheel 310. With this configuration, even in a state in which the lower functional module 800 is coupled to the robot body 100, the entire load of the robot 1 may be concentrated vertically above the wheel 310, and the wheel 310 can stably support the robot 1.

Meanwhile, in the embodiment of the present disclosure, the gravity compensator 215 generates a restoring force in a direction of lifting the robot body 100. Therefore, even in a state in which the suspension motor MS is not driven, the pair of leg units 200 can maintain the state of lifting the robot body 100 to a predetermined height from the ground.

Meanwhile, the robot 1 according to the embodiment of the present disclosure can maintain the balance by lifting any one of the pair of wheels 310 to pass an obstacle or driving the suspension motor MS when the height of the robot body 100 is lowered for charging, etc.

When the suspension motor MS is driven, the link coupling portion 213 moves upward as the first link 210 rotates about the motor coupling portion 212. In addition, the third link 230 is moved by rotating the first link 210. In addition, the second link 220 is rotated by being pushed by the third link 230. As a result, one end portion of the third link 230 may be moved rearward, and the other end portion of the third link 230 may be moved upward.

With this configuration, even when the wheel 310 moves upward and downward, a movement range of the wheel 310 in the front-rear direction may be limited. Therefore, the robot 1 can stably maintain the balance.

Therefore, the robot 1 according to the present disclosure may pass obstacles of various heights using the four-bar linkage structure.

In the robot 1 according to the embodiment of the present disclosure, a center C1 of the first link coupling hole 131 and a center C2 of the second link coupling hole 132 may be disposed at a predetermined first distance d1. In addition, a center C1 of the motor coupling portion 212 of the first link 210 and a center C3 of the link coupling part 213 of the first link 210 may be disposed at a predetermined second distance d2. In addition, a center C2 of the frame coupling portion 222 of the second link 220 and a center C4 of the link coupling portion 223 of the second link 220 may be disposed at a predetermined third distance d3. In addition, a center C3 of the third link coupling hole 232 of the third link 230 and a center C4 of the fourth link coupling hole 233 of the third link 230 may be disposed at a predetermined fourth distance d4. In addition, the center C3 of the third link coupling hole 232 of the third link 230 and a center C5 of the wheel coupling portion 234 of the third link 230 may be disposed at a predetermined fifth distance d5.

Meanwhile, C5 can be defined as the rotation center of the wheel.

In this case, the first distance d1, the second distance d2, the third distance d3, the fourth distance d4, and the fifth distance d5 may be disposed to have a predetermined length ratio. For example, the first distance d1 may be 0.5 times or more and 0.6 times or less the fifth distance d5. The second distance d2 may be 0.95 times or more and 1.05 times or less the fifth distance d5. The third distance d3 may be 1.1 times or more and 1.2 times or less the fifth distance d5. The fourth distance d4 may be 0.2 times or more and 0.3 times or less the fifth distance d5.

With this configuration, even when the third link 230 is moved by driving the motion motor MS, a movement distance of the wheel coupling portion 234 in the front-rear direction can be maintained within a predetermined deviation ΔD. For example, even when the third link 230 is moved, the movement distance of the center C5 of the wheel coupling portion 234 in the front-rear direction can be maintained within 2% of the fifth distance d5.

Therefore, while the robot 1 is moving, the center of gravity of the robot body 100 may be disposed vertically above the wheel 310. Therefore, the robot 1 can be prevented from shaking in the front-rear direction while moving and can maintain the balance.

In addition, according to the robot 1 according to the present disclosure, even when the wheels 310 move upward while the robot 1 passes an obstacle, the balance can be maintained without changing locations of the wheels 310 in the front-rear direction.

The balance of the robot 1 in a left-right direction according to the embodiment of the present disclosure will be described with reference to FIGS. 15 and 16 as follows.

As shown in FIGS. 15 and 16, the robot body 100 is supported by the pair of leg units 200 and the wheel unit 300.

The load of the robot body 100 may be transmitted to the wheel 310 through the leg units 200, and the wheel 310 may support the leg units 200 and the robot body 100.

In this case, the pair of leg units 200 may be disposed symmetrically (line symmetrically). In particular, the link-coupled portions of the pair of leg units 200 may be disposed in parallel.

Specifically, the motor coupling portions 212 of the pair of first links 210 may be disposed in parallel. The link coupling portions 213 of the pair of first links 210 may be disposed in parallel. The frame coupling portions 222 of the pair of second links 220 may be disposed in parallel. The link coupling portions 223 of the pair of second links 220 may be disposed in parallel. The wheel coupling portions 234 of the pair of third links 230 may be disposed in parallel.

With this configuration, the module coupling space 153 having a predetermined width ΔS is formed at the lower side of the robot body 100. The module coupling space 153 may be formed in parallel to the pair of leg units 200. In addition, the module coupling space 153 may be formed in parallel to the pair of wheels 310.

At least one motor including the suspension motor MS and the battery 560 may be provided inside the robot body 100. In addition, when the robot 1 is placed on the ground, the entire load of the robot body 100 in a state in which the motor and the battery 560 are accommodated may be applied to the leg units 200.

In particular, since the robot 1 according to one embodiment of the present disclosure is provided with the leg unit 200 at both side surfaces of the robot body 100, the load of the robot body 100 is concentrated on the pair of side frames 130 and the pair of leg units 200.

In this case, as shown in FIG. 15, based on when viewing the front surface of the robot 1 from the front of the robot 1, the side frame 130 and the leg units 200 may all be disposed vertically above the wheel unit 300.

For example, when viewing the front surface of the robot 1 as shown in FIG. 15, the side frame 130 and the leg units 200 may be disposed in a virtual space extending the wheel 310 in the vertical direction (vertical direction).

That is, as shown in FIG. 15, both the side frames 130 and the leg units 200 may all be disposed between a virtual line al vertically extending the outer end portion of the wheel 310 in the axial direction and a virtual line a2 vertically extending the inner end portion of the wheel 310 in the axial direction.

Specifically, the side frames 130 may both be disposed between the virtual line a1 vertically extending the outer end portion of the wheel 310 in the axial direction and the virtual line a2 vertically extending the inner end portion of the wheel 310 in the axial direction.

The first link 210 may be disposed between the virtual line a1 vertically extending the outer end portion of the wheel 310 in the axial direction and the virtual line a2 vertically extending the inner end portion of the wheel 310 in the axial direction.

The second link 220 may be disposed between the virtual line a1 vertically extending the outer end portion of the wheel 310 in the axial direction and the virtual line a2 vertically extending the inner end portion of the wheel 310 in the axial direction.

The third link 230 may have at least a portion coupled to the inner end portion of the wheel 310 in the axial direction. The third links 230 may both be disposed in a virtual space vertically extending the wheel unit 300. For example, the third link may be disposed between the virtual line a1 vertically extending the outer end portion of the wheel 310 in the axial direction and a virtual line vertically extending an inner end portion of the wheel housing 320 in the axial direction.

In addition, thicknesses (length of the robot 1 in the left-right direction) of the leg unit 200 and the side frame 130 are smaller than a thickness (length of the robot 1 in the left-right direction, ΔW) of the wheel 310.

With this configuration, the entire load of the robot body 100 applied to the side frames 130 and the leg units 200 can be stably supported by the wheels 310 disposed thereunder in the direction of gravity.

As shown in FIG. 16, the entire load F1 of the robot body 100 may be distributed to a pair of side frames 130 disposed on both side surfaces of the robot body 100.

In this case, since the first link 210 and the second link 220 are coupled to the pair of side frames 130, the entire load F1 of the robot body 100 may be distributed toward a point at which the side frame 130 and the first link 210 are coupled and a point at which the side frame 130 and the second link 220 are coupled (F2).

In addition, the distributed force F2 may be applied toward the ground along the first link 210 and the second link 220 (F3). In addition, the force F3 applied along the first link 210 and the second link 220 may be transmitted along the wheels 310 to press the ground B (F4).

In this case, since a thickness of the wheel 310 is greater than thicknesses of the side frame 130 and the leg unit 200, the force pressing the ground can be stably distributed, and the balance of the robot 1 can be stably maintained.

Meanwhile, the load of the robot body 100 applied along the first link 210 and the second link 220 may be supported by the third link 230 (F5). In addition, the force of pressing the first link 210 due to the load of the robot body 100 may be canceled by the gravity compensator 215, and thus the robot 1 can be stably supported.

Therefore, according to the robot 1 according to the embodiment of the present disclosure, the balance of the robot body 100 can be stably maintained by concentrating the load of the robot body 100 vertically above the pair of wheels 310.

In addition, the leg unit 200 may be pressed vertically downward by the load of the robot body 100, and the application of the load of the robot 1 in the left-right direction can be prevented, thereby preventing the robot 1 from shaking in the left-right direction.

### Lower functional module

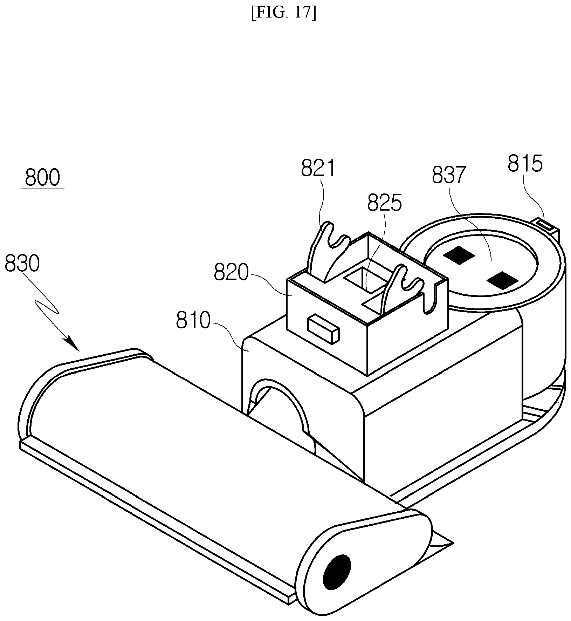

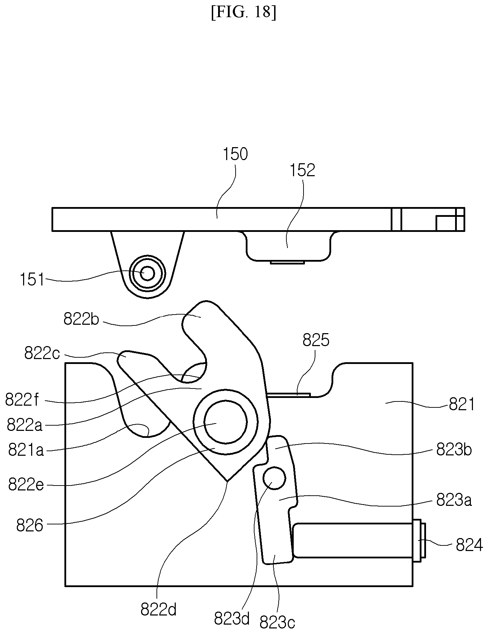

FIG. 17 is a view for describing the lower functional module in the robot according to one embodiment of the present disclosure, and FIGS. 18 to 23 are views for describing a process in which a coupling bar of the robot body is coupled to the lower functional module in the robot according to one embodiment of the present disclosure.

The lower functional module 800 of the robot 1 according to one embodiment of the present disclosure will be described with reference to FIGS. 17 to 23 as follows.

The lower functional module 800 is a component coupled to the robot body 100 to provide various functions to the robot 1.

The lower functional module 800 is detachably coupled to the robot body 100. Specifically, the lower functional module 800 may be detachably coupled to a lower surface (bottom surface) of the lower cover 150. In addition, the lower functional module 800 may be detachably coupled to the robot body 100 in a space formed between the pair of leg units 200 and the pair of wheel units 300.

With this configuration, various functions may be performed by coupling the lower functional module 800 to the lower side of the robot body 100 according to the user's needs or circumstances.

In addition, after separating the lower functional module 800 coupled, the function may be changed by being coupled to the lower functional module 800 for performing another function, or in a state of being coupled to the upper functional module 700, a new function may be added by additionally mounting the lower functional module 800.

The lower functional module 800 may be placed on the floor surface (ground) before being coupled to the robot body 100. In addition, the lower functional module 800 may be coupled to the robot body 100 to move along the floor surface (ground). In addition, the lower functional module 800 may be placed on the floor surface (ground) when separated from the robot body 100.

Here, the lower functional module 800 may be mainly configured as functions that are advantageous to be disposed closer to the floor surface than the upper functional module 700 is. That is, since the upper functional module 700 is disposed above the robot body 100, the upper functional module 700 preferably provides a function in which a predetermined height should be maintained, such as arranging a cup at a height which faces the user's eyes or at which the user's hand easily reaches or mounting an object such as a mobile phone at a location at which the user easily picks the object up. In contrast, the lower functional module 800 preferably has a function that should be placed on the floor surface or disposed at a location lower than the robot body 100.

As an example, the lower functional module 800 may include a battery (not shown), a suction nozzle 830, and a dust bin 837. With this configuration, when the lower functional module 800 is coupled to the robot body 100, the robot 1 may perform dry cleaning.

As another example, the lower functional module 800 may include a mop that rotates about a rotational axis and a water container for storing water supplied to the mop. With this configuration, when the lower functional module 800 is coupled to the robot body 100, the robot 1 may perform wet cleaning.

As another example, the lower functional module 800 may include an arm and a gripper. With this configuration, when the lower functional module 800 is coupled to the robot body 100, the gripper may grip a mobile phone or a large object and transport the same to another location.

To avoid repeated description, the following description will be made based on the lower functional module 800 having a dry cleaning function, but the present disclosure is not limited thereto and may also be applied to the lower functional module 800 having other functions.

The lower functional module 800 includes a lower functional module body 810. The lower functional module body 810 may be configured to form the exterior of the lower functional module 800. For example, the lower functional module body 810 may have a rectangular parallelepiped shape formed to extend in the front-rear direction. With this configuration, the lower functional module body 810 may be disposed between the lower side of the lower cover 150 and the pair of leg units 200.

A device (e.g., the suction nozzle 830) for providing a function to the lower functional module 800 may be coupled to the lower functional module body 810. Devices such as a battery and a motor may be embedded into the lower functional module main body 810.

Meanwhile, the lower functional module 800 may include a lamp 815. The lamp 815 may indicate the location of the lower functional module 800 through light emission. For example, the lamp 815 may be an infrared (IR) light emitting diode (LED).

For reference, the rear of the lower functional module 800 may be a direction in which the lamp 815 is disposed with respect to the corresponding terminal 825. In addition, the front of the lower functional module 800 may be a direction opposite to the rear (e.g., a direction in which the suction nozzle 830 is disposed).

The lower functional module body 810 may be provided with a robot body fastening unit 820 to be described below.

The lower functional module 800 includes the robot body fastening unit 820 coupled to the robot body 100.

The robot body fastening unit 820 may be coupled to an upper surface of the lower functional module body 810. In addition, the robot body fastening unit 820 is coupled to the lower surface of the robot body 100. Specifically, the robot body fastening unit 820 is coupled to the coupling bar 151 and the charging terminal 152 that are provided on the lower cover 150.

In the robot 1 according to one embodiment of the present disclosure, the robot body fastening unit 820 includes a fastening unit body 821.

The fastening unit body 821 may be coupled to the lower functional module body 810 to accommodate the coupling bar 151 of the robot body 100 in a state in which the robot body 100 and the lower functional module 800 are coupled.

Specifically, a bar accommodation groove 821a may be formed in the fastening unit body 821. The bar accommodation groove 821a may be formed to be concave downward from an upper surface of the fastening unit body 821.

The bar accommodation groove 821a may accommodate at least a portion of the coupling bar 151. The bar accommodation groove 821a may be formed to correspond to the shape of the coupling bar 151. For example, the bar accommodation groove 821a may be formed in a left-right direction of the lower functional module 800 corresponding to the shape of the cylindrical coupling bar 151.

With this configuration, in a state in which the robot body 100 and the lower functional module 800 are coupled, the coupling bar 151 may be accommodated in the bar accommodation groove 821a. In addition, the upper surface of the fastening unit body 821 may be supported by being in contact with the lower surface of the lower cover 150. Therefore, even when the robot body 100 moves in a state in which the robot body 100 and the lower functional module 800 are coupled, it is possible to prevent the shake of the lower functional module 800.

The robot body fastening unit 820 includes a coupling hook 822. The coupling hook 822 may be rotatably coupled to the fastening unit body 821 and coupled to the coupling bar 151 accommodated in the bar accommodation groove 821a by rotation.

Specifically, the coupling hook 822 includes a coupling hook body 822a, a bar support portion 822b, a bar guide portion 822c, a locking protrusion 822d, a shaft 822e, and an accommodation groove 822f.

The coupling hook body 822a is rotatably coupled to the fastening unit body 821. In addition, the bar support portion 822b may be formed to protrude from one side of the coupling hook body 822a in a longitudinal direction. The bar guide portion 822c may be formed to protrude from the coupling hook body 822a at a predetermined distance on the bar support portion 822b. The locking protrusion 822d may be formed at the other side of the coupling hook body 822a. The shaft 822e may be rotatably coupled to the coupling hook body 822a. In the coupling hook body 822a, the accommodation groove 822f may be formed between the bar support portion 822b and the bar guide portion 822c.

For example, the coupling hook body 822a may be formed in a block shape with a predetermined thickness. The coupling hook body 822a may be rotated about the shaft 822e. With this configuration, the bar support portion 822b, the bar guide portion 822c, and the locking protrusion 822d may be rotated while the coupling hook body 822a is rotated.

The bar support portion 822b may be formed to protrude and extend from the coupling hook body 822a and may be in contact with the coupling bar 151. For example, the bar support portion 822b may be formed to protrude and extend from one side of the coupling hook body 822a to a predetermined thickness and a predetermined length. In this case, at least a portion of the bar support portion 822b may be disposed above the bar guide portion 822c in the direction of gravity.

The bar support portion 822b may be rotated about the shaft 822e coupled to the coupling hook body 822a. For example, the bar support portion 822b may be in contact with the lower surface of the lower cover 150 and rotated downward. As another example, when the bar guide portion 822c is pressed downward by the coupling bar 151, the bar support portion 822b may be rotated together with the coupling hook body 822a by the rotation of the bar guide portion 822c. As still another example, the bar support portion 822b may be rotated together with the coupling hook body 822a by an elastic force of a torsion spring 826.

The bar support portion 822b may be in contact with and may support the coupling bar 151, thereby preventing the separation of the coupling bar 151 coupled to the lower functional module 800. In a state in which the coupling bar 151 is coupled to the robot body fastening unit 820, the bar support portion 822b may be disposed above the coupling bar 151.

In this case, when the robot body 100 is moved upward, the coupling bar 151 may also be moved upward. In addition, the coupling bar 151 moving upward may be supported by the bar support portion 822b.

With this configuration, even when the robot body 100 is moved upward, the bar support portion 822b can prevent the lower functional module 800 and the robot body 100 from being arbitrarily separated.

The bar support portion 822c may be formed to protrude and extend from the coupling hook body 822a and may be in contact with the coupling bar 151. For example, the bar support portion 822c may be formed to protrude and extend from one side of the coupling hook body 822a to a predetermined thickness and a predetermined length. In this case, at least a portion of the bar guide portion 822c may be disposed under the bar support portion 822b in the direction of gravity.

The bar guide portion 822c may be rotated about the shaft 822e coupled to the coupling hook body 822a. As an example, the bar guide portion 822c may be in contact with the coupling bar 151 and rotated by being pressed downward by the coupling bar 151. As another example, when the bar support portion 222b is pressed downward by the lower surface of the lower cover 150, the bar guide portion 822c may be rotated together with the coupling hook body 822a by the rotation of the bar support portion 822b. As still another example, the bar guide portion 822c may be rotated together with the coupling hook body 822a by the elastic force of the torsion spring 826.

The bar guide portion 822c may guide the movement of the coupling bar 151. For example, when the coupling bar 151 moves downward, the bar guide portion 822c may be in contact with the coupling bar 151 and rotated downward. The bar guide portion 822c may be rotated by the elastic force of the torsion spring 826 to guide the upward movement of the coupling bar 151.

The locking protrusion 822d may be formed protrude from the coupling hook body 822a and may be in contact with a support stopper 823 to be described below. The locking protrusion 822d may be formed to protrude from the other side of the coupling hook body 822a. For example, the locking protrusion 822d may be disposed at the opposite side of the bar support portion 822d with respect to the coupling hook body 822a.

The locking protrusion 822d may be rotated about the shaft 822e coupled to the coupling hook body 822a. For example, the locking protrusion 822d may be rotated together with the coupling hook body 822a when the bar support portion 822b or the bar guide portion 822c is rotated by being pressed. As another example, the locking protrusion 822d may be rotated together with the coupling hook body 822a by the elastic force of the torsion spring 826.

The locking protrusion 822d may be coupled to the support stopper 823. For example, the locking protrusion 822d may be rotated together with the coupling hook body 822a and accommodated in a locking protrusion accommodation portion 823b formed on the support stopper 823 at a predetermined location. With this configuration, in a state in which the locking protrusion 822d is accommodated in the locking protrusion accommodation portion 823b, the coupling hook 822 and the support stopper 823 may be supported by being in contact with each other and rotated by being decoupled only when an external force of a predetermined magnitude or more is applied.

The shaft 822e is rotatably coupled to the coupling hook body 822a. The shaft 822e may provide an axis about which the coupling hook body 822a rotates.

The accommodation groove 822f may be formed in the coupling hook body 822a to accommodate the coupling bar 151. The accommodation groove 822f may be formed between the bar support portion 822b and the bar guide portion 822c. For example, the accommodation groove 822f may be disposed between the bar support portion 822b and the bar guide portion 822c that are formed to protrude from the coupling hook body 822a. That is, the accommodation groove 822f may be a groove formed to be concave between the bar support portion 822b and the bar guide portion 822c.

With this configuration, when the robot body 100 moves downward to be coupled to the lower functional module 800, the coupling bar 151 may move downward and may be accommodated in the accommodation groove 822f formed between the bar support portion 822b and the bar guide portion 822c.

A space formed in the accommodation groove 822f may communicate with a space formed in the bar accommodation groove 821a. The coupling bar 151 may be accommodated in the above communicating space.

The support stopper 823 may be rotatably coupled to the fastening unit body 821 and fastened to the coupling hook 822 when the coupling hook 822 is rotated to a predetermined location.

The support stopper 823 includes a stopper body 823a, a locking protrusion accommodation portion 823b, a switch contact portion 823c, and a shaft 823d.

The stopper body 823a is rotatably coupled to the fastening unit body 821. In addition, the locking protrusion accommodation portion 823b may be formed at one side of the stopper body 823a in the longitudinal direction. The switch contact portion 823c may be formed at the other side of the stopper body 823a. The shaft 823d may be rotatably coupled to the stopper body 823a.

For example, the stopper body 823a may be formed in a block shape with a predetermined thickness. The stopper body 823a may be rotated about the shaft 823d. With this configuration, the stopper body 823a may be rotated to rotate the locking protrusion accommodation portion 823b and the switch contact portion 823c.

The locking protrusion accommodation portion 823b may be formed in the stopper body 823a to accommodate the locking protrusion 822d of the coupling hook 822.

For example, the locking protrusion accommodation portion 823b may be formed at one side of the stopper body 823a. In this case, the locking protrusion accommodation portion 823b may be formed to protrude and extend from the stopper body 823a and may have a groove capable of accommodating the locking protrusion 822d formed therein. That is, the locking protrusion accommodation portion 823b may be formed to have a step at one side of the support stopper body 823a in the longitudinal direction.

With this configuration, when the locking protrusion 822d is rotated to a predetermined location, the locking protrusion may be accommodated in the groove formed in the locking protrusion accommodation portion 823b. In addition, in a state in which the locking protrusion 822d is accommodated in the locking protrusion accommodation portion 823b, the coupling hook 822 and the support stopper 823 may be supported by being in contact with each other and rotated by being decoupled only when an external force of a predetermined magnitude or more is applied.

The switch contact portion 823c may be formed on the stopper body 823a to receive an external force through a switch 824 to be described below.

The switch contact portion 823c may be formed to protrude and extend from the other side of the stopper body 823a. For example, the switch contact portion 823c may be disposed at the opposite side of the locking protrusion accommodation portion 823b with respect to the stopper body 823a.

At least a portion of the switch contact portion 823c may be disposed on a linear movement area of the switch 824. With this configuration, when moving linearly, the switch 824 may press the switch contact portion 823c.

A length of the switch contact portion 823c extending from the stopper body 823a may be larger than a length of the locking protrusion accommodation portion 823b extending from the stopper body 823a. Therefore, using the rotation center of the support stopper 823 as the origin, a distance to a location at which the support stopper 823 is in contact with the switch 824 may be larger than a distance to a location at which the coupling hook 822 is in contact with the support stopper 823. With this configuration, the coupling hook 822 and the support stopper 823 may be unfastened using a force of the switch 824 pressing the support stopper 823.

The shaft 823d is rotatably coupled to the stopper body 823a. The shaft 823d may provide an axis about which the stopper body 823a rotates.

The switch 824 may be provided to linearly move on the fastening unit body 821 to rotate the support stopper 823 through the linear movement.

For example, the switch 824 may be provided to be pressed by a user. The switch 824 may be formed in a cylindrical shape and may have one end portion in the axial direction (longitudinal direction) disposed to be exposed to the outside of the fastening unit body 821 and the other end portion in the axial direction disposed inside the fastening unit body 821.

As another example, the switch 824 may be provided with an actuator (not shown) and moved linearly by an operation of the actuator.

With this configuration, the switch 824 may press the support stopper 823 while moving linearly, and as the support stopper 823 is rotated, the support stopper 823 and the coupling hook 822 may be unfastened.

The corresponding terminal 825 may be disposed on the fastening unit body 821 and when the robot body 100 and the lower functional module 800 are coupled, may be in contact with the charging terminal 152 disposed on the lower cover 150.

The lower functional module 800 is electrically connected to the robot body 100 by coupling the charging terminal 152 to the corresponding terminal 825.

The corresponding terminal 825 may be formed to correspond to the shape of the charging terminal 152. For example, the corresponding terminal 825 may be disposed on a groove formed to be recessed downward from the upper surface of the fastening unit body 821 corresponding to the shape of the charging terminal 152 formed to protrude downward from the lower cover 150.

With this configuration, when the robot body 100 and the lower functional module 800 are coupled, the charging terminal 152 and the corresponding terminal 825 may be coupled at a correct location. In addition, in a state in which the robot body 100 and the lower functional module 800 are coupled, it is possible to prevent the shake or separation of the lower functional module 800.

The torsion spring 826 may apply a restoring force to the coupling hook 822 when the coupling hook 822 is rotated. The torsion spring 826 may be wound to surround an outer circumferential surface of the shaft 822e of the coupling hook 822. In this case, both end portions of the torsion spring 826 may be coupled to the shaft 822e and the coupling hook body 822a, respectively.

Therefore, when the coupling bar 151 moves downward to rotate the coupling hook 822, the elastic force may be generated from the torsion spring 826. In this case, the elastic force of the torsion spring 826 may be smaller than a supporting force (coupling force) between the coupling hook 822 and the support stopper 823. Therefore, the state in which the robot body 100 is coupled to the lower function module 800 can be maintained.

In addition, when an external force is applied through the switch 824 and the coupling hook 822 and the support stopper 823 are decoupled, the torsion spring 826 may apply a rotational force to the coupling hook 822.

A process in which the lower cover 150 of the robot body is coupled to and separated from the robot body fastening unit 820 of the lower functional module 800 in the robot according to one embodiment of the present disclosure will be described as follows.

When the robot body 100 moves downward to be coupled to the lower functional module 800, the coupling bar 151 and the charging terminal 152 move downward together with the lower cover 150. In this case, the coupling hook 822 is disposed vertically under the coupling bar 151, and the corresponding terminal 825 is disposed vertically under the charging terminal 152 (see FIG. 18).

When the robot body 100 moves downward, the coupling bar 151 may be in contact with the bar guide portion 822c of the coupling hook 822, and the coupling bar 151 may press the bar guide portion 822c. In addition, as the bar guide portion 822c is pressed downward, the coupling hook body 822a, the bar support portion 822b, and the locking protrusion 822d that are connected to the bar guide portion 822c may be rotated together.

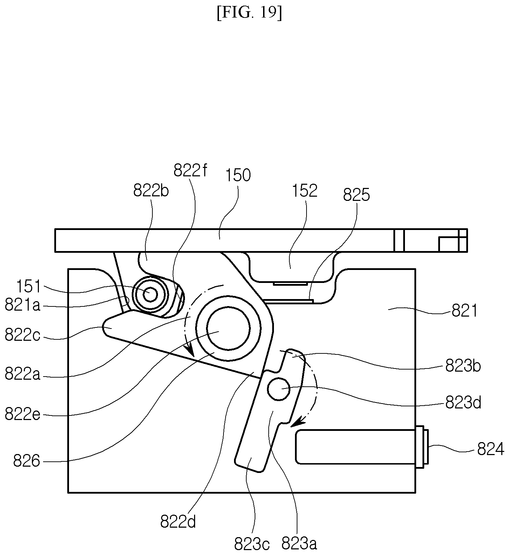

In this case, when the coupling bar 151 begins to be in contact with the bar guide portion 822c, the charging terminal 152 and the corresponding terminal 825 may be in a noncontact state. In addition, the locking protrusion 822d may be rotated by pushing the support stopper 823 (see FIG. 19).

Then, when the robot body 100 further moves downward, the locking protrusion 822d is accommodated by being fitted into the locking protrusion accommodation portion 823b, and the charging terminal 152 is in contact with the corresponding terminal 825. Therefore, the rotation of the coupling hook 822 may be restricted by the support stopper 823.

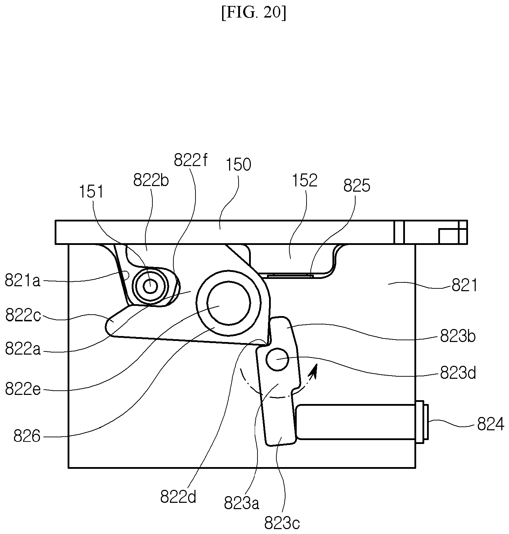

As the coupling bar 151 of the lower cover 150 is caught on the coupling hook 822 of the lower functional module 800, the lower functional module 800 may be physically coupled to the robot body 100. In addition, the charging terminal 152 and the corresponding terminal 825 may be electrically connected. In addition, the coupling bar 151 may be accommodated in the accommodation groove 822f and can be prevented from being separated by the bar support portion 822b (see FIG. 20).

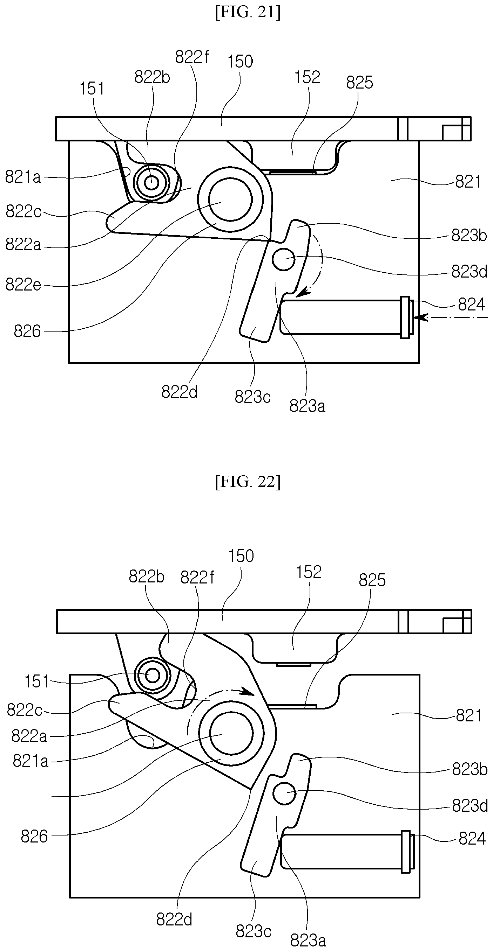

Meanwhile, in a state in which the robot body 100 is coupled to the lower functional module 800, when the switch 824 moves linearly, the switch 824 may press the switch contact portion 823c of the support stopper 823. Therefore, as the support stopper 823 rotates, the support stopper 823 and the coupling hook 822 may be unfastened. When the support stopper 823 and the coupling hook 822 are unfastened, the torsion spring 826 may apply a rotational force to the coupling hook 822 (see FIG. 21).

Meanwhile, in a state in which the support stopper 823 and the coupling hook 822 are unfastened, the coupling bar 151 cannot be separated from the coupling hook 822 as long as the robot body 100 does not move upward.

On the other hand, in a state in which the support stopper 823 and the coupling hook 822 are unfastened, when the robot body 100 moves upward, the coupling bar 151 moves upward, and the coupling hook 822 may be rotated by the restoring force of the torsion spring 826 to open a moving path of the coupling bar 151. In this case, the electrical connection between the charging terminal 152 and the corresponding terminal 825 may be ended (see FIG. 22).

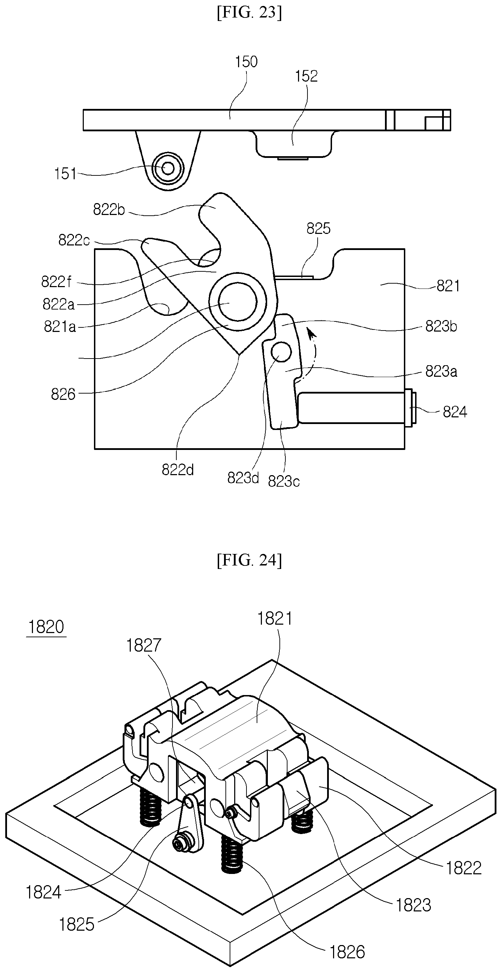

Then, when the robot body 100 further moves upward, the coupling bar 151 may be separated from the coupling hook 822, and the robot main body 100 may be physically separated from the lower functional module 800 (see FIG. 23).

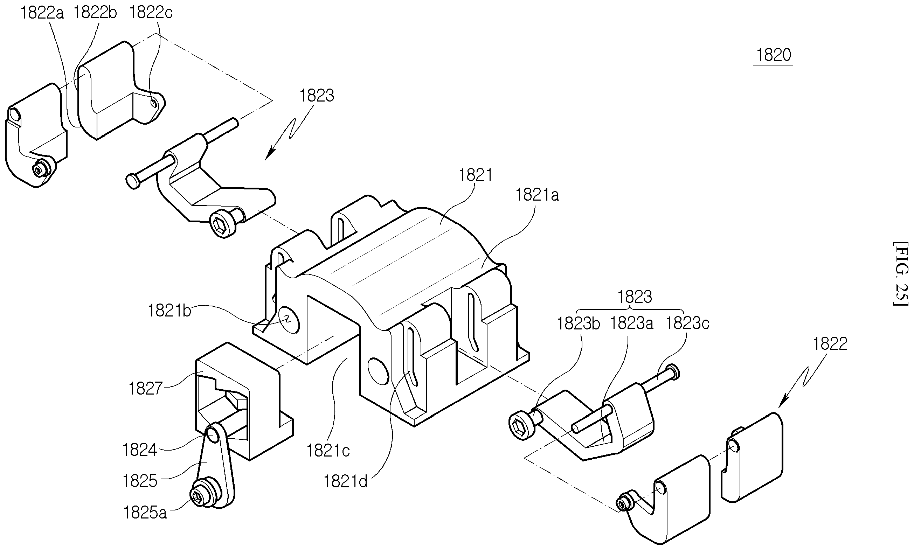

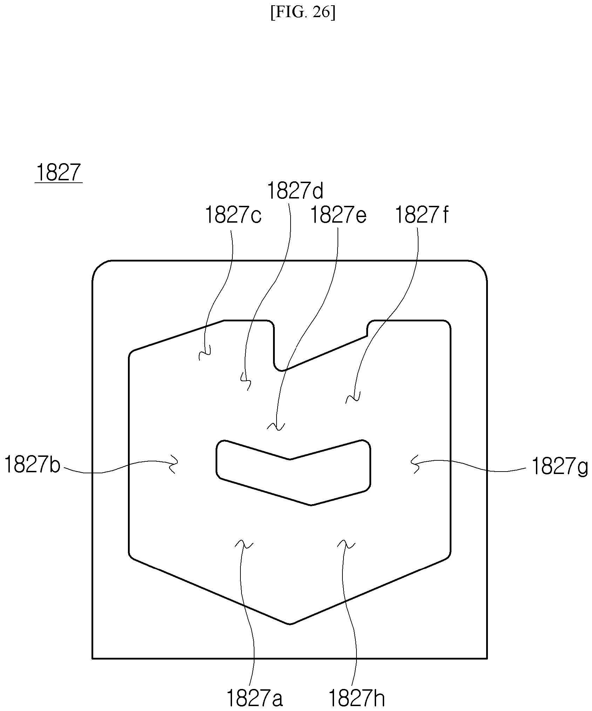

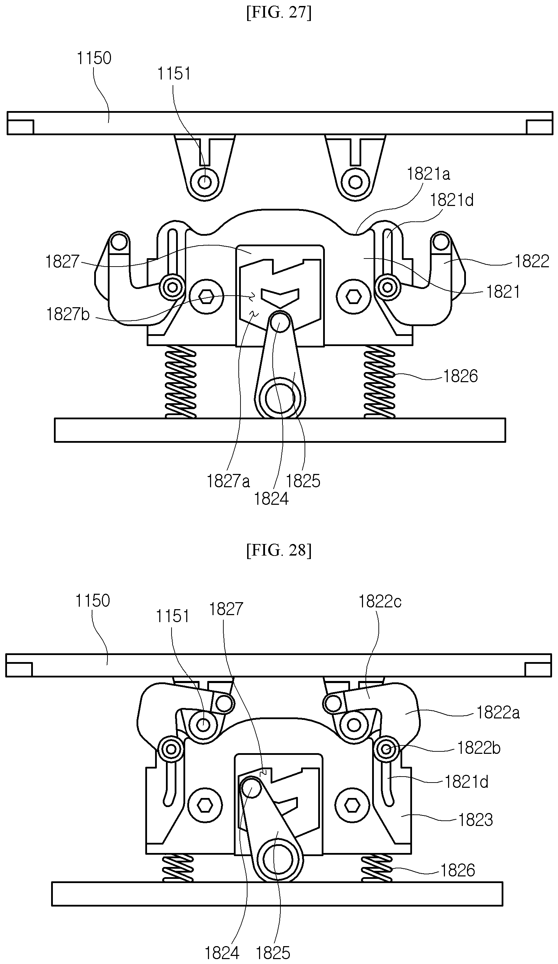

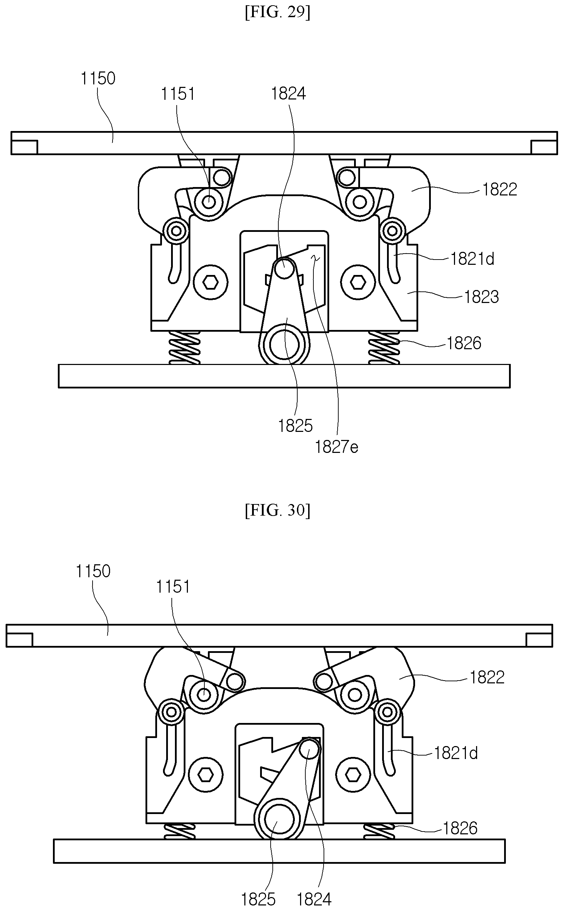

Meanwhile, FIG. 24 is a perspective view for describing a robot body fastening unit of a lower functional module in a robot according to another embodiment of the present disclosure, FIG. 25 is an exploded perspective view for describing the robot body fastening unit of the lower functional module in the robot according to another embodiment of the present disclosure, FIG. 26 is a view for describing a shape of a guide hole in the robot according to another embodiment of the present disclosure, and FIGS. 27 to 30 are views for describing a relationship of the movement of a support pin and the rotation of a coupling hook according to the movement of a fastening unit body in the robot according to another embodiment of the present disclosure.

A lower functional module 1800 of the robot 1 according to one embodiment of the present disclosure will be described with reference to FIGS. 24 to 30 as follows.

Meanwhile, to avoid repeated description, the configuration and effects of the lower functional module 800 according to one embodiment of the present disclosure are the same, except for contents specifically described in the present embodiment, and thus may be used.

The lower functional module 1800 according to the present embodiment may include a robot body fastening unit 1820.

The robot body fastening unit 1820 may be coupled to an upper surface of a lower functional module body 1810. In addition, the robot body fastening unit 1820 is coupled to the lower surface of the robot body 100. Specifically, the robot body fastening unit 1820 is coupled to a coupling bar 1151 and a charging terminal 1152 that are provided on a lower cover 1150.

In the robot 1 according to one embodiment of the present disclosure, the robot body fastening unit 1820 includes a fastening unit body 1821.

The fastening unit body 1821 may be coupled by accommodating the coupling bar 1151. For example, the fastening unit body 1820 may be formed in a block shape with a predetermined volume.

The fastening unit body 1821 may be coupled to at least one spring 1826. For example, at least one spring 1826 may be coupled to a lower surface of the fastening unit body 1821. With this configuration, the fastening unit body 1821 may be connected to the upper surface of the lower functional module body 1810 through the spring 1826.

In addition, the fastening unit body 1821 may be in contact with the coupling bar 1151 to move in the vertical direction.

A bar accommodation groove 1821a may be formed in the fastening unit body 1821. The bar accommodation groove 1821a may be formed to be concave downward from an upper surface of the fastening unit body 1821. For example, a pair of bar accommodation grooves 1821a may be formed in parallel on the upper surface of the fastening unit body 1821.

The bar accommodation groove 1821a may accommodate at least a portion of the coupling bar 1151. The bar accommodation groove 1821a may be formed to correspond to the shape of the coupling bar 1151. For example, a pair of coupling bars 1151 may be provided in parallel and disposed on the lower cover 1150, and a pair of bar accommodation grooves 1821a may be formed in parallel corresponding to the cylindrical coupling bars 1151.

Meanwhile, at least a portion of a connection link 1823 may be accommodated in the fastening unit body 1821. For example, a groove in which at least a portion of a connection link body 1823a is accommodated may be formed in the fastening unit body 1821.

In addition, a link coupling hole 1821b may be formed in the fastening unit body 1821. A hinge pin 1823b coupled to the connection link 1823 may be rotatably coupled by passing through the link coupling hole 1821b.

Meanwhile, a bar accommodation groove 1821c may be formed in the fastening unit body 1821. A pin guide portion 1827 may be accommodated in the guide accommodation groove 1821c.

The guide accommodation groove 1821c may be formed on a surface of the fastening unit body 1821 different from a surface to which the connection link 1823 is coupled. For example, when the connection link 1823 is coupled to both side surfaces of the fastening unit body 1821 in the left-right direction, the guide accommodation groove 1821c may be formed on a front surface of the fastening unit body 1821.

The bar accommodation groove 1821c may be formed to correspond to a shape of the pin guide portion 1827. For example, when the pin guide portion 1827 is formed in a quadrangular block shape, the guide accommodation groove 1821c may be formed in a quadrangular groove shape. In addition, when a protrusion, etc. for guiding a coupling location is formed on the pin guide portion 1827, a groove that accommodates the protrusion, etc. may be formed in the guide accommodation groove 1821c at a location facing the protrusion, etc.

Meanwhile, a link guide hole 1821d may be formed in the fastening unit body 1821. For example, the link guide hole 1821d may be formed in a long hole shape. A shaft provided on a coupling hook 1822 may be inserted into the link guide hole 1821d, and the shaft may be moved along the link guide hole 1821d.

The robot body fastening unit 1820 includes the coupling hook 1822. The coupling hook 1822 may be rotatably coupled to the fastening unit body 1821 and coupled to the coupling bar 1151 accommodated in the bar accommodation groove 1821a by rotation. For example, a plurality of coupling hooks 1822 may be provided and coupled to each of both sides of the fastening unit body 1821.

The coupling hook 1820 may be coupled to the connection link 1823 and rotated in conjunction with the rotation of the connection link 1823, thereby preventing the separation of the coupling bar 1151. For example, a plurality of coupling hooks 1820 may be provided to be coupled to the connection links 1823 coupled to both sides of the fastening unit body 1821.

Specifically, the coupling hook 1822 includes a coupling hook body 1822a, a bar support portion 1822b, and a hinge portion 1822c.

The coupling hook body 1822a may be formed in a block shape with a predetermined thickness, and the bar support portion 1822b may be formed to extend from one side of the coupling hook body 1822a. Meanwhile, the hinge portion 1822c may be formed to protrude and extend from the coupling hook body 1822a. In this case, the bar support portion 1822b may be disposed at a predetermined angle with the hinge portion 1822c.

The coupling hook body 1822a may be rotated about the hinge portion 1822c. With this configuration, the coupling hook body 1822a may be rotated to rotate the bar support portion 1822b.

The bar support portion 1822b may be formed to extend from the coupling hook body 1822a and may be in contact with the coupling bar 1151. For example, the bar support portion 1822b may be formed to extend from one side of the coupling hook body 1822a to a predetermined thickness and a predetermined length.

The bar support portion 1822b is rotatably coupled to the connection link 1823. For example, a hole may be formed in the bar support portion 1822b so that the hook pin 1823c of the connection link 1823 may be coupled by passing through the bar support portion 1822b. With this configuration, when the connection link 1823 is rotated, the hook pin 1823c may be rotated, and the bar support portion 1822b may be rotated in conjunction with the hook pin 1823c.

The bar support portion 1822b may be rotated about the hinge portion 1822c. For example, when the fastening unit body 1821 is pressed downward by the coupling bar 1151, the connection link 1823 may be rotated, and the bar support portion 1822b may be rotated by the rotation of the connection link 1823.

The bar support portion 1822b may be in contact with and may support the coupling bar 151, thereby preventing the separation of the coupling bar 1151 coupled to the lower functional module 1800. In a state in which the coupling bar 1151 is coupled to the robot body fastening unit 1820, the bar support portion 1822b may be disposed above the coupling bar 1151.

In this case, when the robot body 100 is moved upward, the coupling bar 1151 may also be moved upward. In addition, the coupling bar 1151 moving upward may be supported by the bar support portion 1822b.

With this configuration, even when the robot body 100 is moved upward, the bar support portion 1822b can prevent the lower functional module 1800 and the robot body 100 from being arbitrarily separated.

The hinge portion 1822c may be formed to extend from the coupling hook body 1822a. For example, the hinge portion 1822c may be formed to extend from the coupling hook body 1822a, and a protruding thickness of the hinge portion 1822c may be smaller than a thickness of the coupling hook body 1822a.

The hinge portion 1822c may be movably coupled to the fastening unit body 1821. A shaft may be coupled by being inserted into the hinge portion 1822c, and the shaft may be accommodated in the link guide hole 1821d formed in the fastening unit body 1821.

With this configuration, when the connection link 1823 is rotated, the hinge portion 1822c may be moved along the link guide hole 1821d and rotated at a predetermined location of the link guide hole 1821d.

The robot body fastening unit 1820 includes the connection link 1823. The connection link 1823 may link the fastening unit body 1821 with the coupling hook 1822.

The connection link 1823 includes the connection link body 1823a, the hinge pin 1823b, and the hook pin 1823c.

For example, the connection link body 1823a may be formed in a bar shape that is bent at least once. In this case, the connection link body 1823a may be bent in a shape that is convex outward from the fastening unit body 1821.

The hinge pin 1823b may be coupled by being inserted into one side of the connection link body 1823a in the longitudinal direction, and the hook pin 1823c may be coupled by being inserted into the other side of the connection link body 1823a in the longitudinal direction.

Therefore, the one side of the connection link body 1823a in the longitudinal direction may be accommodated in the fastening unit body 1821. In addition, the connection link body 1823a may be rotatably coupled to the fastening unit body 1821 by the hinge pin 1823b. That is, the connection link body 1823a may be rotated about the hinge pin 1823b.

In addition, the connection link body 1823a may be coupled to be rotated relatively with respect to the coupling hook 1822 by the hook pin 1823c.

At least a portion of the other side of the connection link body 1823a in the longitudinal direction may be disposed vertically above the coupling bar 1151 accommodated in the accommodation groove 1821a according to the rotation of the connection link body 1823a. With this configuration, the connection link body 1823a can prevent the coupling bar 1151 from being separated arbitrarily.

A support pin 1824 may be coupled by being inserted into the pin guide portion 1825 to guide the movement of the fastening unit body 1821.

The support pin 1824 may be coupled to one side of a pin link 1825 and accommodated in guide holes 1827a to 1827h formed in the pin guide portion 1825. For example, the support pin 1824 may be formed in a bar shape. The support pin 1824 may be moved along the guide holes 1827a to 1827h.

The pin link 1825 may be rotatably coupled to the lower functional module body 1810. For example, the pin link 1825 may have the one side in the longitudinal direction to the support pin 1824 and the other side in the longitudinal direction rotatably coupled to the lower functional module body 1810.

With this configuration, when the support pin 1824 moves along the guide holes 1827a to 1827h formed in the pin guide portion 1827, the pin link 1825 may be rotated. Therefore, the shortest distance between the lower surface of the fastening unit body 1821 and the upper surface of the lower functional module body 1810 may be changed according to the rotation of the pin link 1825.

The spring 1826 may apply an elastic force to the fastening unit body 1821 when the fastening unit body 1821 moves in the vertical direction.

Specifically, at least one spring 1826 may be disposed between the lower surface of the fastening unit body 1821 and the upper surface of the lower functional module body 1810 to generate a restoring force when the distance between the lower surface of the fastening unit body 1821 and the upper surface of the lower functional module body 1810 is changed. For example, the spring 1826 may be a coil spring, one end portion of the coil spring may be coupled to the lower surface of the fastening unit body 1821, and the other end portion of the coil spring may be coupled to the upper surface of the lower functional module body 1810.

With this configuration, when the coupling bar 1151 presses the fastening unit body 1821 as the robot body 1100 moves downward, the spring 1826 may generate an elastic force (restoring force) in the direction of lifting the fastening unit body 1821.

The robot body fastening unit 1820 includes the pin guide portion 1827. The pin guide portion 1827 guides the movement of the support pin 1824.

The pin guide portion 1827 may be coupled to the fastening unit body 1821 and may movably accommodate the support pin 1824.

Specifically, the pin guide portion 1827 is coupled to the guide accommodation groove 1821c of the fastening unit body 1821, and the guide holes 1827a to 1827h for guiding the movement of the support pin are formed.

The guide holes 1827a to 1827h may be spaces in which the support pin 1824 may be accommodated and moved. The guide holes 1827a to 1827h may be formed in a closed curve shape.

For example, the guide holes 1827a to 1827h include the first guide hole 1827a, the second guide hole 1827b, the third guide hole 1827c, the fourth guide hole 1827d, the fifth guide hole 1827e, the sixth guide hole 1827f, the seventh guide hole 1827g, and the eighth guide hole 1827h.

The first guide hole 1827a may be formed to be inclined at a predetermined angle with respect to the ground. The second guide hole 1827b may communicate with the first guide hole 1827a and may be formed in a direction perpendicular to the ground. The third guide hole 1827c may communicate with the second guide hole 1827b, may be formed to be inclined at a predetermined angle with respect to the ground, and disposed farther from the ground than the first guide hole 1827a is.

The fourth guide hole 1827d may communicate with the third guide hole 1827c and may be formed in the direction perpendicular to the ground. The fifth guide hole 1827e may communicate with the fourth guide hole 1827d, may be formed to be inclined at a predetermined angle with respect to the ground, and disposed closer to the ground than the third guide hole 1827a is. The sixth guide hole 1827f may communicate with the fifth guide hole 1827e, may be formed to be inclined at a predetermined angle with respect to the ground, and formed to have a height that gradually increases from a point at which the sixth guide hole 1827f communicates with the fifth guide hole 1827e.

The seventh guide hole 1827g may communicate with the sixth guide hole 1827f and may be formed in a direction perpendicular to the ground. The eighth guide hole 1827h may communicate with the seventh guide hole 1827g and the first guide hole 1827a and may be formed to be inclined at a predetermined angle with respect to the ground.

When the fastening unit body 1821 is pressed by the coupling bar 1151 or the fastening unit body 1821 is lifted by the spring 1826, the support pin 1824 may be moved relatively in a relationship with the fastening unit body 1821 along the guide holes 1827a to 1827h.

That is, when the fastening unit body 1821 is moved downward by being pressed by the coupling bar 1151, the support pin 1824 may be moved upward relatively in the guide holes 1827a to 1827h. In addition, when the fastening unit body 1821 is lifted by the spring 1826, the support pin 1824 may be moved downward relatively in the guide holes 1827a to 1827h.

Therefore, the guide holes 1827a to 1827h may include an area in which the support pin 1824 is moved upward relatively and an area in which the support pin 1824 is moved downward relatively with respect to the fastening unit body 1821. In addition, the guide holes 1827a to 1827h may include an area in which the support pin 1824 is stopped.

Referring to FIGS. 26 to 30, a process in which the support pin 1824 moves relatively with respect to the fastening unit body 1821 and a process in which the coupling hook 1822 is coupled to the coupling bar 151 will be described as follows.

First, before the robot body 1100 is coupled to the lower functional module 1800, the support pin 1824 is stopped at a point at which the first guide hole 1827a is connected to the eighth guide hole 1827h.

When the coupling bar 1151 presses the fastening unit body 182 while moving downward as the robot body 100 moves downward, the fastening unit body 1821 may be moved downward, and the support pin 1824 may be moved upward relatively along the first guide hole 1827a, the second guide hole 1827b, and the third guide hole 1827c. That is, the support pin 1824 may be moved upward obliquely along the first guide hole 1827a, moved upward vertically along the second guide hole 1827b, and moved upward obliquely along the third guide hole 1827c.

In this case, as the fastening unit body 1821 is moved downward and the connection link 1823 is rotated about the hinge pin 1823b, the hook pin 1823c may be disposed vertically above the coupling bar 1151. In addition, the bar support portion 1822b of the coupling hook 1822 may be disposed vertically above the coupling bar 1151 according to the rotation of the hook pin 1823c, and the hinge portion 1822c thereof may be moved along the link guide hole 1821d.

Then, when the downward movement of the robot body 1100 stops, the fastening unit body 1821 may be moved upward by the elastic force (restoring force) of the spring 1826, and the support pin 1824 may be moved downward relatively along the fourth guide hole 1827d and the fifth guide hole 1827e. That is, the support pin 1824 may be moved downward vertically along the fourth guide hole 1827d and moved downward obliquely along the fifth guide hole 1827e.

In addition, the support pin 1824 may be stopped at a point at which the fifth guide hole 1827e is connected to the sixth guide hole 1827f, and the robot body 100 may be fixedly coupled to the lower function module 1800.

Then, the robot body 1100 may be moved downward to decouple the robot body 1100 from the lower functional module 1800. When the robot body 1100 is moved downward, the support pin 1824 may be moved upward obliquely relatively along the sixth guide hole 1827f.

In addition, when the support pin 1824 is located on the seventh guide hole 1827g and the downward movement of the robot body 1100 is ended, the fastening unit body 1821 may be moved upward by the elastic force (restoring force) of the spring 1826, and the support pin 1824 may be moved downward relatively along the seventh guide hole 1827g and the eighth guide hole 1827h. That is, the support pin 1824 may be moved downward vertically along the seventh guide hole 1827g and moved downward obliquely along the eighth guide hole 1827h.

In this case, as the fastening unit body 1821 is moved upward and the connection link 1823 is rotated about the hinge pin 1823b, the hook pin 1823c may disappear vertically above the coupling bar 1151. In addition, the coupling hook 1822 may disappear vertically above the coupling bar 1151.

At the same time, when the robot body 1100 is moved upward, the robot body 1100 may be separated from the lower functional module 1800.

Then, before the robot body 1100 is decoupled from the lower functional module 1800, the support pin 1824 may be stopped at a point at which the first guide hole 1827a is connected to the eighth guide hole 1827h.

### A coupling process of robot body and lower functional module

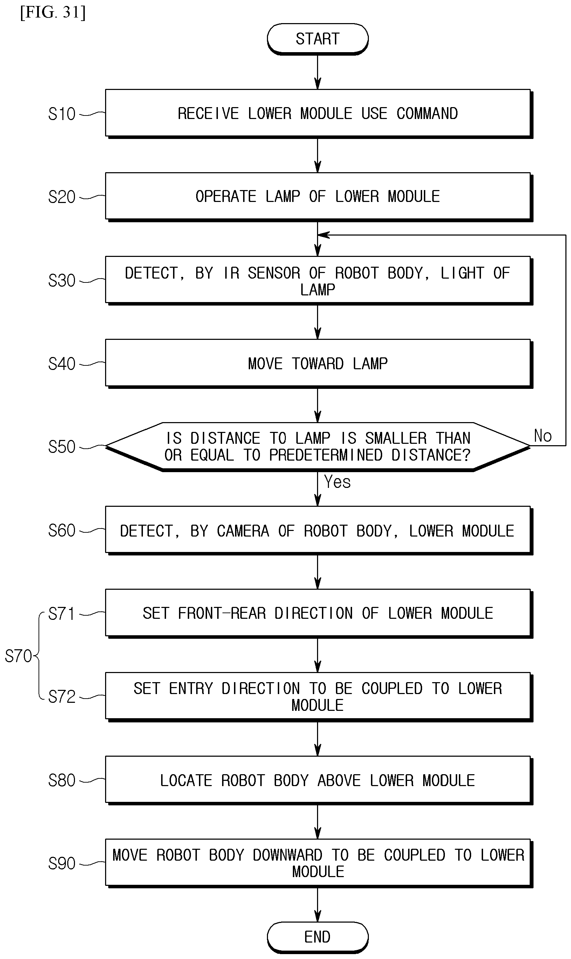

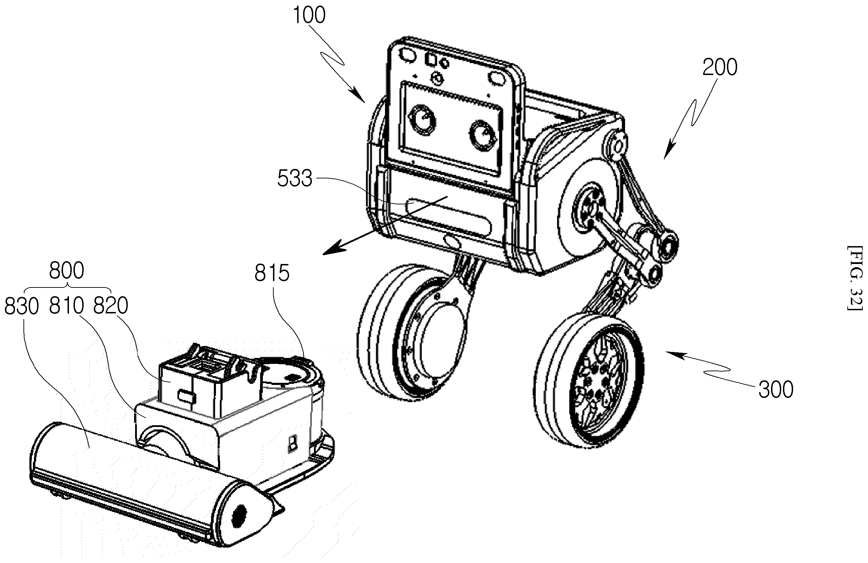

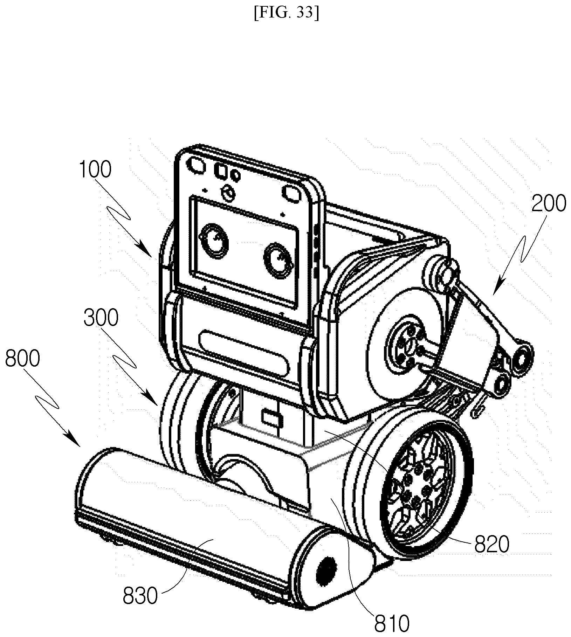

FIG. 31 is a flowchart for describing a moving process for detecting a location of the lower functional module and being coupled to the lower functional module in the robot according to one embodiment of the present disclosure, FIG. 32 is a view for describing a state in which the robot according to one embodiment of the present disclosure approaches the lower functional module to be coupled thereto, and FIG. 33 is a view for describing a state in which the robot according to one embodiment of the present disclosure is coupled to the lower functional module.

The overall process of coupling the robot body 100 to the lower functional module 800 in the robot 1 according to one embodiment of the present disclosure will be described with reference to FIGS. 31 to 33 as follows.

The robot body 100 may be coupled to the lower functional module 800 when the user's commands or preset conditions are satisfied (S10).

The robot 1 may receive commands from the user. As an example, the commands may be received from the user through the input unit 555. As another example, the commands may be received from the user through the microphone 551. As still another example, the commands may be received from the user through the communication unit 580.

The robot 1 may receive a command to perform a predetermined function using the lower functional module 800. As an example, the robot 1 may receive a command to perform a dry cleaning function using the lower functional module 800. As another example, the robot 1 may receive a command to perform a wet cleaning function using the lower functional module 800. As still another example, the robot 1 may receive a command to perform a transport function using the lower functional module 800.

In contrast, conditions coupled to the lower functional module 800 may be set in the robot 1 in advance. For example, the conditions coupled to the lower functional module 800 may be set in the memory 570 in advance.

When the robot 1 receives a command to use the lower functional module 800, the lamp 815 provided in the lower functional module 800 may be operated (S20). For example, the lamp 815 may emit infrared (IR) rays.

In this case, the lower functional module 800 may operate the lamp 815 according to a preset pattern. Specifically, when a plurality of lower functional modules 800 having different functions are present, each lower functional module 800 may operate the lamp 815 in a different pattern.

When the lamp 815 of the lower functional module 800 is activated, the IR sensor 533 provided in the robot body 100 may detect light emitted from the lamp 815 (S30). For example, the IR sensor 533 may detect the infrared rays emitted from the lamp 815. Therefore, the robot body 100 may detect the location of the lower functional module 800.

Meanwhile, when the plurality of lower functional modules 800 having different functions are present, the controller 510 may recognize the pattern of light detected from each lower functional module 800 through the IR sensor 533 and identify the function of the lower functional module 800.

After the IR sensor 533 detects the light radiated from the lamp 815, the robot body 100 may move toward the lamp 815 (S40). For example, the IR sensor 533 may be disposed on an inner front portion of the robot body 100 to change the proceeding direction of the robot body 100 so that the lamp 815 is located in the front of the robot body 100, and the robot body 100 may move toward the lamp 815.

After the robot body 100 moves toward the lamp 815, a distance from the robot body 100 to the lamp 815 may be measured (S50). In this case, when the distance from the robot body 100 to the lamp 815 is greater than or equal to a preset distance, the IR sensor 533 may re-detect the light of the lamp 815.

When the distance from the robot body 100 to the lamp 815 is smaller than or equal to the preset distance, the first camera 531 provided in the robot body 100 may detect a specific location and specific shape of the lower functional module 800 by photographing the lower functional module 800 (S60). That is, when the first camera 531 photographs the lower functional module 800, the controller 510 may detect the specific location and specific shape of the lower functional module 800.

After detecting the specific location and specific shape of the lower functional module 800, the controller 510 may set a direction in which the robot body 100 approaches the lower functional module 800 (S70).

Specifically, after detecting the shape of the lower functional module 800, the controller 510 may set a direction in which the lower functional module 800 is disposed (S71). For example, the controller 510 may set the location at which the lamp 815 is disposed to the rear of the lower functional module 800 and set a front-rear direction in the longitudinal direction of the lower functional module body 810 with respect to the lamp 815. That is, the controller 510 may detect the shape of the lower functional module 800 and set the front-rear direction (vector) of the lower functional module 800 in the longitudinal direction of the lower functional module 800.

In addition, the controller 510 may set a direction in which the robot body 100 enters the upper side of the lower functional module 800 to be coupled to the lower functional module 800 (S72). For example, the controller 510 may control the robot body 100 to enter the lower functional module 800 from the rear side.

Then, the robot body 100 may move to the upper side of the lower functional module 800 (S80). For example, the robot body 100 may pass vertically upward from the ramp 815 and then move so that the coupling bar 151 is disposed vertically above the bar accommodation groove 821a. In addition, the charging terminal 152 may be moved to be disposed vertically above the corresponding terminal 825.

Then, when the charging terminal 152 of the lower cover 150 of the robot body 100 and the corresponding terminal 825 of the lower functional module 800 are disposed to overlap vertically, the robot body 100 moves downward, and the charging terminal 152 is in contact with the corresponding terminal 825, and thus the robot body 100 and the lower functional module 800 are electrically connected, and the coupling hook 822 is caught on the coupling bar 151, and thus the robot body 100 is physically connected to the lower functional module 800 (S90).

Although the present disclosure has been described in detail through specific embodiments, this is intended to specifically describe the present disclosure, and it is apparent that the present disclosure is not limited thereto, and the present disclosure can be modified or improved by those skilled in the art without departing from the technical spirit of the present disclosure.

All simple modifications or changes of the present disclosure fall within the scope of the present disclosure, and the specific scope of the present disclosure will be made clear by the appended claims.

### DESCRIPTION OF REFERENCE NUMERALS

1: robot
100: robot body
151: coupling bar
800, 1800: lower functional module
810, 1810: lower functional module body
820, 1820: robot body fastening unit
821, 1821: fastening unit body
822, 1822: coupling hook
823: support stopper
824: switch
826: torsion spring
1823: connection link
1824: support pin
1825: pin link
1826: spring
1827: pin guide portion

## Claims

1. A robot comprising:
a robot body in which a motor and a battery are accommodated;
leg units facing each other and each coupled to an outermost portion of the robot body;
wheel units rotatably coupled to the leg units and disposed between the leg units and the ground; and
a lower functional module detachably coupled to the robot body in a space formed between the pair of leg units and the pair of wheel units,
wherein a lower surface of the robot body is provided with a coupling bar detachable coupled to the lower functional module, and
the lower functional module includes:
a fastening unit body in which a bar accommodation groove in which at least a portion of the coupling bar is accommodated is formed; and
a coupling hook rotatably coupled to the fastening unit body and coupled to the coupling bar accommodated in the bar accommodation groove by rotation.

2. The robot of claim 1, wherein the lower functional module further includes a support stopper rotatably coupled to the fastening unit body and fastened to the coupling hook when the coupling hook is rotated to a predetermined location.

3. The robot of claim 2, wherein the lower functional module further includes a switch provided to move linearly in the fastening unit body and rotating the support stopper when moving linearly.

4. The robot of claim 1, wherein the coupling hook includes:
a coupling hook body rotatably coupled to the fastening unit body; and
a support unit formed to protrude and extend from the coupling hook body and in contact with the coupling bar when the coupling hook body rotates.

5. The robot of claim 2, wherein the coupling hook further includes:
a coupling hook body rotatably coupled to the fastening unit body; and
a locking protrusion formed to protrude from the coupling hook body to be fastened to the support stopper.

6. The robot of claim 5, wherein the support stopper includes:
a support stopper body rotatably coupled to the fastening unit body; and
a locking protrusion accommodation portion formed to have a step at one side of the support stopper body in a longitudinal direction and accommodating the locking protrusion.

7. The robot of claim 1, wherein the lower functional module further includes a torsion spring configured to apply a restoring force to the coupling hook when the coupling hook rotates.

8. The robot of claim 1, wherein the lower functional module further includes:
a lower functional module body;
a pin guide portion which is coupled to the fastening unit body and in which a guide hole is formed; and
a support pin inserted into the pin guide portion to support the fastening unit body.

9. The robot of claim 8, wherein the lower functional module further includes a pin link having one side in the longitudinal direction coupled to the support pin and the other side in the longitudinal direction rotatably coupled to the lower functional module body.

10. The robot of claim 8, wherein the guide hole movably accommodates the support pin and is formed in a closed curve shape.

11. The robot of claim 8, wherein the guide hole includes an area in which the support pin relatively moves upward, an area in which the support pin relatively moves downward, and an area in which the support pin is stopped with respect to the fastening unit body.

12. The robot of claim 11, wherein the guide hole includes:
a first guide hole formed to be inclined at a predetermined angle with respect to the ground;
a second guide hole communicating with the first guide hole and formed in a direction perpendicular to the ground;
a third guide hole communicating with the second guide hole, formed to be inclined at a predetermined angle with respect to the ground, and disposed farther from the ground than the first guide hole is;
a fourth guide hole communicating with the third guide hole and formed in the direction perpendicular to the ground;
a fifth guide hole communicating with the fourth guide hole, formed to be inclined at a predetermined angle with respect to the ground, and disposed between the first guide hole and the third guide hole;
a sixth guide hole communicating with the fifth guide hole, formed to be inclined at a predetermined angle with respect to the ground, and having a height that gradually increases from a point at which the sixth guide hole communicates with the fifth guide hole;
a seventh guide hole communicating with the sixth guide hole and formed in the direction perpendicular to the ground; and
an eighth guide hole communicating with the seventh guide hole and the first guide hole and formed to be inclined at a predetermined angle with respect to the ground.

13. The robot of claim 8, wherein the lower functional module includes a connection link connecting the fastening unit body to the coupling hook.

14. A robot comprising:
a robot body in which a motor and a battery are accommodated;
a leg unit coupled to each of both side surfaces of the robot body;
a wheel unit rotatably coupled to the leg unit; and
a lower functional module detachably coupled to a lower side of the robot body,
wherein the lower functional module includes:
a lower functional module body; and
a lamp provided on the lower functional module body and emitting infrared rays.

15. The robot of claim 14, wherein the lamp is disposed on a rear end portion of the lower functional module body, and
the robot body passes vertically upward from the lamp, then is moved downward, and coupled to the lower functional module.
